# FASCICULE DE BREVET EUROPEEN

(11) **EP 4 374 109 B1**
(45) Date de publication et mention de la délivrance du brevet: **10.09.2025**
(21) Numéro de dépôt: 22734654.1
(22) Date de dépôt: 04.07.2022
(51) Int. Cl.: F23C 9/00, F23C 10/00, F23C 99/00, B01J 8/18

(54) **PROCEDE ET INSTALLATION CLC AVEC RECUPERATION D'OXYGENE GAZEUX PRODUIT PAR UN PORTEUR D'OXYGENE**
CLC-ANLAGE UND VERFAHREN MIT RÜCKGEWINNUNG VON DURCH EINEN SAUERSTOFFTRÄGER ERZEUGTEM GASFÖRMIGEM SAUERSTOFF
CLC PLANT AND METHOD WITH RECOVERY OF GASEOUS OXYGEN PRODUCED BY AN OXYGEN CARRIER

(30) Priorité: 23.07.2021 FR 2108030
(43) Date de publication de la demande: 29.05.2024
(73) Titulaire: IFP Energies nouvelles, 92852 Rueil-Malmaison (FR); TotalEnergies OneTech, 92400 Courbevoie (FR)
(72) Inventeur: LAROCHE, Catherine, 92852 RUEIL-MALMAISON CEDEX (FR); GUILLOU, Florent, 92852 RUEIL-MALMAISON CEDEX (FR); TILLAND, Airy, 92852 RUEIL-MALMAISON CEDEX (FR)
(74) Mandataire: IFP Energies nouvelles
(86) Numéro de dépôt international: PCT/EP2022/068466
(87) Numéro de publication internationale: WO 2023/001535

(56) Documents cités:
- FR-A1- 2 895 413
- FR-A1- 2 895 413
- FR-A1- 2 983 488
- FR-A1- 2 983 488
- FR-A1- 3 004 126
- FR-A1- 3 004 126

## Description

### Domaine technique

La présente invention concerne le domaine de la combustion de charges hydrocarbonées par oxydo-réduction en boucle chimique (« CLC » pour Chemical Looping Combustion selon la terminologie anglo-saxonne) opérant en lit fluidisé, et plus particulièrement un procédé et une installation CLC exploitant l'oxygène gazeux produit par un porteur d'oxygène par effet CLOU.

### Technique antérieure

La lutte contre l'émission de gaz à effet de serre implique, parmi le panel de solutions techniques proposées, le captage des gaz issus de la combustion de charges carbonées comme le CO₂. La combustion en boucle chimique est non seulement l'une des technologies présentant une pénalité énergétique de captage parmi les plus basses, mais elle est aussi une technologie de captage de CO₂ particulièrement adaptée à la combustion de charges solides difficiles à traiter par les procédés de combustion traditionnels comme la combustion de charges solides pulvérisées.

Un procédé CLC consiste à mettre en œuvre des réactions d'oxydo-réduction d'une masse active, typiquement un oxyde métallique, pour décomposer la réaction de combustion d'une charge hydrocarbonée en deux réactions successives : une première réaction d'oxydation de la masse active au contact d'un gaz oxydant, typiquement de l'air, dans au moins une zone d'oxydation, et une deuxième réaction de réduction de la masse active au contact de la charge dont on souhaite la combustion, dans au moins une zone de combustion.

La masse active oxydo-réductrice, qui cède une partie de l'oxygène qu'elle renferme au contact avec la charge dans la zone de combustion, joue ainsi un rôle de transporteur d'oxygène entre ladite zone de combustion et la zone d'oxydation où elle est à nouveau oxydée. On la désigne communément sous l'expression « porteur d'oxygène ».

Ce matériau solide se présente sous la forme de particules fluidisables, de taille typique comprise entre 50 et 500 µm. Les particules sont mises en contact dans les zones réactionnelles, avec soit le gaz oxydant, soit la charge, sous forme de lits fluidisés à haute température, et sont généralement transportées d'une zone à l'autre sous une forme fluidisée. L'ensemble des particules transportées sous une forme fluidisée est communément appelé lit fluidisé circulant.

Ces particules sont oxydées au contact d'un gaz oxydant, typiquement de l'air (ou de la vapeur d'eau), dans au moins une première zone réactionnelle, appelée zone d'oxydation ou encore réacteur d'oxydation ou réacteur air. Elles sont ensuite transportées dans au moins une seconde zone réactionnelle appelée zone de réduction ou encore réacteur de réduction, réacteur de combustion ou réacteur fuel, où elles sont mises en contact avec une charge hydrocarbonée dont on souhaite effectuer la combustion. La charge peut être solide (ex : charbon), liquide (ex. : fuel), ou gazeuse (ex. : gaz naturel). L'oxygène contenu dans les particules de la masse active, transportées de la zone d'oxydation à la zone de réduction, alimente la combustion de la charge. Il en résulte un effluent gazeux formé par la combustion de la charge, communément appelée fumées de combustion, et un flux de particules réduites. Les particules sont renvoyées au réacteur air pour y être ré-oxydées, fermant ainsi la boucle.

Les réacteurs d'oxydation et de combustion opèrent en lit fluidisés. Ils comprennent chacun au moins un système d'injection d'un gaz de fluidisation. Dans le réacteur de combustion, le gaz de fluidisation est typiquement du CO₂, qui peut être du CO₂ produit lors de la combustion et recyclé, ou de la vapeur d'eau. Dans le réacteur d'oxydation, le gaz de fluidisation est un gaz oxydant, typiquement de l'air.

Le procédé CLC permet de produire de l'énergie (par exemple sous forme de vapeur, d'électricité, etc.) par récupération de la chaleur dégagée par les réactions de combustion tout en facilitant la capture du dioxyde de carbone (CO₂) émis lors de la combustion grâce à la production de fumées riches en CO₂. Le captage du CO₂ peut en effet se faire après condensation de la vapeur d'eau et compression des fumées, et celui-ci peut alors être stocké, par exemple dans un aquifère profond, ou être valorisé, par exemple en l'employant pour améliorer le rendement des exploitations pétrolières dans des procédés de récupération assistée du pétrole (EOR pour Enhanced Oil Recovery en anglais) ou de gaz (EGR pour Enhanced Gas Recovery en anglais).

Le procédé CLC peut également permettre la production de gaz de synthèse, voire d'hydrogène, en contrôlant la combustion et en mettant en œuvre les purifications requises en aval du procédé de combustion.

Ce mode particulier de combustion en boucle chimique a aussi pour avantage de produire un flux très riche en azote, qui est l'air appauvri obtenu à l'issue de l'oxydation de la masse active dans le réacteur air. Selon le degré de pureté atteint, ce flux d'azote peut être valorisé dans diverses applications, notamment dans le domaine de l'industrie pétrolière. Il peut par exemple être utilisé en raffinerie en tant que gaz inerte dans différents procédés de raffinage du pétrole ou pour le traitement des eaux de production, ou en tant que gaz injecté dans le sous-sol dans des procédés EOR.

La conversion des charges hydrocarbonées gazeuses dans le réacteur fuel met en œuvre une réaction gaz/solide entre lesdites charges gazeuses et le porteur d'oxygène pouvant être limitante pour le procédé. Dans le cas de charges hydrocarbonées solides, une étape de gazéification additionnelle est requise pour transformer la charge solide en espèces gazeuses (production de gaz de synthèse CO et H₂) réagissant avec le porteur d'oxygène. Si la charge utilisée est donc une charge solide, l'étape de gazéification peut être limitante (temporellement). Dans le cas de charges hydrocarbonées liquides, une étape de vaporisation de la charge liquide et de formation de coke sur le porteur d'oxygène se produisent généralement dans le réacteur fuel. Là encore, cette étape de vaporisation du liquide et formation du coke, et la gazéification du coke peuvent être limitantes.

Pour pallier ces limitations, en particulier dans le cas de la combustion de charges hydrocarbonées solides ou gazeuses, il a été proposé dans la littérature, par exemple par Mattisson et al. 2009 (« Chemical-looping with oxygen uncoupling for combustion of solid fuels », Int. journal of greenhouse gas control 3, 2009, pp.11-19) d'utiliser des porteurs d'oxygène capable de relarguer de l'oxygène gazeux (dioxygène sous forme gazeuse). Les procédés de combustion utilisant ce type de porteur d'oxygène sont appelés procédés de combustion en boucle chimique avec découplage de l'oxygène ou CLOU pour « Chemical Looping with Oxygen Uncoupling » selon la terminologie anglo-saxonne. Typiquement, les procédés CLOU se basent sur la combustion en boucle chimique (CLC) et impliquent trois étapes dans deux réacteurs, un réacteur air où le porteur d'oxygène est oxydé au contact de l'air (étape 1), et un réacteur fuel où le porteur libère l'oxygène gazeux (étape 2) et où cet oxygène gazeux réagit avec la charge hydrocarbonée (étape 3). Ainsi, avec de tels porteurs d'oxygène, il est possible de mettre en œuvre des réactions gaz/gaz directement entre l'oxygène gazeux relargué par le porteur d'oxygène et les réactifs sous forme gazeuse (espèces gazeuses produites par dévolatilisation et/ou gazéification de la charge hydrocarbonée lorsque celle-ci est solide ou liquide) et ainsi augmenter les vitesses de conversion de la charge hydrocarbonée. De plus, dans le cas de la combustion de charges hydrocarbonées solides, l'oxygène relargué peut réagir directement avec les charges solides avant gazéification (combustion classique).

Les pérovskites, les oxydes de cuivre, de cobalt ou de manganèse, les oxydes mixtes fer-cobalt ou fer-manganèse, font par exemple partie des matériaux présentant de bonnes propriétés de relarguage d'oxygène, tel que décrit dans Mattisson et al., 2009, ou Shafiefarhood et al. 2015 «Iron-containing mixed-oxide composites as oxygen carriers for CLOU », Fuel 139, 2015, pp.1-10). Selon Mattisson et al., 2009 par exemple, l'utilisation de matériaux porteur d'oxygène relarguant de l'oxygène gazeux permettrait d'augmenter jusqu'à 50 fois la vitesse de conversion de charges hydrocarbonées solides. La particularité de ces porteurs d'oxygène capables de relarguer de l'oxygène gazeux, qu'on peut appeler ici « porteurs d'oxygène à effet CLOU », est qu'une portion seulement de l'oxygène disponible dans le matériau est relarguée sous forme gazeuse. Le reste de l'oxygène du porteur d'oxygène réagit avec la charge hydrocarbonée mise en contact avec le porteur d'oxygène, au travers d'une réaction gaz/solide. L'oxygène gazeux est relargué très rapidement par le porteur d'oxygène lorsqu'il est sous atmosphère inerte, ce qui constitue un avantage indéniable pour son utilisation dans le cadre de la combustion d'une charge hydrocarbonée.

Dans un procédé CLC classique, le porteur d'oxygène peut être exposé pendant un temps non négligeable, typiquement quelques minutes, à une atmosphère inerte, c'est-à-dire constituée d'azote, de CO₂ ou de vapeur d'eau, seuls ou en mélange, entre les réacteurs air et fuel. Selon la nature du porteur d'oxygène utilisé, cette exposition peut avoir pour conséquence le relargage d'une partie de l'oxygène du porteur d'oxygène par effet CLOU, qui n'est classiquement pas exploitée dans le procédé CLC.

Le brevet EP3158264 divulgue un procédé CLC dans lequel le porteur d'oxygène est envoyé dans un échangeur de chaleur fonctionnant en lit fluidisé dense, positionné entre le réacteur air et le réacteur fuel, dans lequel on contrôle la récupération de chaleur en faisant varier le niveau du lit fluidisé par l'application d'une perte de charge sur une évacuation du gaz de fluidisation au sommet de l'échangeur de chaleur. Le temps de séjour dans l'échangeur de chaleur du porteur d'oxygène issu du réacteur air peut permettre le relargage spontané d'oxygène gazeux par effet CLOU s'il est placé à basse pression partielle d'O₂, cet oxygène gazeux pouvant être utilisé dans la zone de réduction pour la combustion de la charge. Cependant, il n'est pas précisé de quelle manière serait utilisé cet oxygène gazeux. En outre, le contrôle des conditions opératoires dans l'échangeur de chaleur est spécifique au contrôle du niveau du lit pour assurer l'échange thermique désiré. L'inventaire du solide porteur d'oxygène dans l'échangeur de chaleur est donc variable en fonction du niveau du lit. De même, le choix de la section de l'enceinte de l'échangeur est dicté par la surface d'échange de chaleur avec le porteur, ce qui peut conduire à mettre en œuvre une fluidisation très importante et donc à diluer l'oxygène relargué par effet CLOU, rendant son exploitation moins efficace.

Le brevet US9004911 porte sur un procédé de combustion en boucle chimique d'une charge hydrocarbonée solide, mettant en œuvre un réacteur fuel spécifique permettant de bénéficier de l'effet CLOU du matériau porteur d'oxygène. Selon ce procédé, il n'y a pas de contact direct entre le porteur d'oxygène et la charge solide : le réacteur fuel est divisé en deux parties séparées par une paroi poreuse permettant le passage de gaz. Le porteur d'oxygène oxydé est introduit dans une des parties, et la charge hydrocarbonée solide est introduite dans l'autre où elle est volatilisée, et éventuellement gazéifiée par l'introduction d'un agent de gazéification (CO₂ et/ou H₂O). Les gaz réducteurs produits par gazéification traversent la paroi poreuse créant ainsi une atmosphère réductrice permettant la réduction du porteur d'oxygène et assurant ainsi la combustion de la charge gazéifiée. Dans le même temps, de l'oxygène gazeux produit par le porteur peut traverser la paroi et assurer la combustion des gaz réducteurs dans la partie contenant la charge solide. Il s'opère ainsi un équilibre permettant la conversion de la charge solide sans contact direct avec le porteur d'oxygène. Cependant, la gazéification de la charge solide nécessite un apport important de chaleur, qui, dans un procédé CLC classique, est fourni par le porteur d'oxygène. Le procédé selon le brevet US9004911, dans lequel le porteur d'oxygène n'est pas en contact avec la charge solide, a donc pour inconvénient majeur de ne pas mettre pleinement à profit l'apport de chaleur par le porteur d'oxygène. Un autre inconvénient de ce procédé réside dans l'utilisation d'une paroi poreuse de grande dimension au cœur d'un réacteur à très haute température, ce qui représente un défi technologique.

Le brevet CN102200277 divulgue également un procédé de combustion en boucle chimique d'une charge hydrocarbonée solide, dans lequel de l'oxygène gazeux est apporté à la charge, mais sans contact avec le porteur d'oxygène, grâce à l'utilisation d'une paroi poreuse. Les inconvénients d'un tel procédé sont sensiblement identiques à ceux discutés ci-avant pour le procédé selon le brevet US9004911 : une technologie complexe à mettre en œuvre, notamment lié à l'implantation d'un réacteur au sein d'un autre, aux températures élevées de combustion, et un problème d'apport de la chaleur nécessaire à la gazéification sans contact direct entre le porteur d'oxygène et la charge.

Un autre procédé de combustion d'une charge hydrocarbonée par oxydo-réduction en boucle chimique de l'art antérieur est divulguée dans le document FR3004126A1.

Il existe un besoin d'améliorer les procédés CLC, notamment en vue de fournir des procédés CLC pouvant traiter tous types de charges, y compris des charges solides pour lesquelles une combustion complète est plus difficile à atteindre, qui soient simples, performants quant au niveau de conversion de la charge, tout en réduisant les dépenses énergétiques, et in fine les coûts opératoires, et/ou tout en limitant le temps de séjour des réactifs dans les zones réactionnelles, ce qui peut notamment permettre d'utiliser des réacteurs fuels plus compacts, et in fine réduire les coûts d'investissements.

A cette fin, il serait avantageux de fournir un procédé CLC dans lequel de l'oxygène gazeux libéré par le porteur d'oxygène peut être exploité.

### Objectifs et Résumé de l'invention

Dans ce contexte, la présente invention vise à surmonter, au moins en partie, les problèmes de l'art antérieur exposés ci-dessus.

La présente invention vise de manière générale à fournir un procédé et une installation CLC qui permettent de récupérer de l'oxygène gazeux libéré par le porteur d'oxygène par effet CLOU de manière à être utilisé dans le procédé et l'installation CLC, tout en permettant le recyclage d'une partie des fumées de combustion pour la fluidisation du réacteur fuel.

Le procédé et l'installation CLC selon l'invention permettent de réduire les coûts opératoires, notamment par la limitation des besoins en utilités extérieures, comme par exemple l'oxygène utilisé pour la combustion d'espèces imbrûlées résiduelle pouvant se trouver dans les fumées de combustion à recycler, ou la vapeur d'eau utilisée en tant que gaz de fluidisation. La conversion de la charge hydrocarbonée est également plus rapide si l'oxygène gazeux récupéré est utilisé dans le réacteur fuel. Le procédé et l'installation CLC selon la présente invention, bien que s'appliquant à tout type de charge hydrocarbonée, qu'elle soit sous forme gaz, solide ou liquide, sont particulièrement bien adaptés à la combustion de charges solides produisant des imbrûlés solides, et des fumées de combustion pouvant plus fréquemment contenir des espèces imbrûlées résiduelles.

Ainsi, pour atteindre au moins l'un des objectifs susvisés, parmi d'autres, la présente invention propose, selon un premier aspect, un procédé de combustion d'une charge hydrocarbonée par oxydo-réduction en boucle chimique dans lequel une masse active oxydo-réductrice sous forme de particules circule entre une zone d'oxydation et une zone de réduction opérant en lit fluidisé, qui comporte :
- la combustion de la charge hydrocarbonée par mise en contact avec la masse active oxydo-réductrice dans la zone de réduction;
- l'oxydation de la masse active oxydo-réductrice issue de ladite zone de réduction par mise en contact avec un gaz oxydant, de préférence de l'air, dans la zone d'oxydation;
- l'envoi de la masse active oxydo-réductrice oxydée dans au moins un dispositif d'étanchéité opérant en lit fluidisé double, positionné en aval de ladite zone d'oxydation sur une ligne de transport de ladite masse active oxydo-réductrice vers ladite zone de réduction, le dispositif d'étanchéité étant alimenté par au moins un gaz de fluidisation neutre, de manière à former au moins un premier flux comportant au moins une partie de ladite masse active oxydo-réductrice envoyé vers ladite zone de réduction et un deuxième flux gazeux comportant une partie du gaz de fluidisation neutre et du dioxygène gazeux libéré par la masse active oxydo-réductrice ;
- le mélange du deuxième flux gazeux avec une partie des fumées de combustion de manière à former un flux de recycle des fumées de combustion envoyé au moins en partie, après avoir été successivement refroidi, comprimé, et réchauffé, dans ladite zone de réduction pour son opération en lit fluidisé.

Selon un ou plusieurs modes de réalisation de l'invention, la partie des fumées de combustion contient des espèces imbrûlées résiduelles issues de la zone de réduction, et la combustion desdites espèces imbrûlées résiduelles est effectuée au contact du dioxygène gazeux apporté par le mélange dudit deuxième flux gazeux avec ladite partie des fumées de combustion.

Selon un ou plusieurs modes de réalisation de l'invention, le procédé comporte l'injection de dioxygène frais dans ladite partie des fumées de combustion pour compléter la combustion desdites espèces imbrûlées résiduelles.

Selon un ou plusieurs modes de réalisation de l'invention, le procédé comporte l'envoi d'une partie du flux de recycle des fumées de combustion, après son refroidissement, compression et réchauffement successifs, dans le dispositif d'étanchéité pour l'opération dudit dispositif d'étanchéité en lit fluidisé.

Selon un ou plusieurs modes de réalisation de l'invention, le flux gazeux de recycle est refroidi par passage dans au moins un premier échangeur de chaleur, puis ledit un flux de recycle des fumées de combustion refroidi est comprimé dans un compresseur, puis ledit un flux de recycle des fumées de combustion refroidi et comprimé est réchauffé par passage dans ledit premier échangeur de chaleur avant d'être envoyé au moins en partie vers la zone de réduction.

Selon un ou plusieurs modes de réalisation de l'invention, le flux de recycle des fumées de combustion est refroidi par passage dans une deuxième échangeur de chaleur positionné entre le premier échangeur de chaleur et le compresseur.

Selon un ou plusieurs modes de réalisation de l'invention, le flux de recycle des fumées de combustion est refroidi à une température comprise entre 70°C et 450°C, de préférence comprise entre 70°C et 300°C, puis comprimé à une pression comprise entre 0,02 MPa et 0,3 MPa, puis réchauffé à une température comprise entre 300°C et 950°C.

Selon un ou plusieurs modes de réalisation de l'invention, le deuxième flux gazeux issu dudit dispositif d'étanchéité comporte entre 1% et 20% vol. de dioxygène gazeux.

Selon un ou plusieurs modes de réalisation de l'invention, la masse active oxydo-réductrice comporte au moins un composé choisi dans la liste constituée par les oxydes de cuivre, les oxydes de cobalt, les oxydes de manganèse, les oxydes mixtes cobalt-fer ou manganèse-fer de préférence sous forme de spinelles, des pérovskites, seuls ou en mélange, et de préférence la masse active oxydo-réductrice comporte au moins un oxyde de cuivre ou de manganèse, de préférence associé à un support d'alumine, de silice, alumino-silicique, de feldspaths tels que la celsiane, la slawsonite, l'anorthite ou de feldspathoïdes tel la kalsilite.

Selon un ou plusieurs modes de réalisation de l'invention, le gaz de fluidisation neutre envoyé dans le dispositif d'étanchéité est essentiellement constitué de vapeur d'eau, de CO₂, ou d'un mélange de CO₂ et de vapeur d'eau comportant entre 0 et 2% vol. d'O₂, de préférence moins de 2% vol. d'O₂.

Selon un ou plusieurs modes de réalisation de l'invention, le dispositif d'étanchéité comporte une enceinte munie d'une première zone et d'une deuxième zone en communication fluidique. Les conditions de fluidisation sont différentes dans ces première et deuxième zones de manière à créer lit fluidisé distinct dans chacune des première et deuxième zones. La première zone reçoit des particules de masse active oxydo-réductrice issues du réacteur d'oxydation, et la deuxième zone reçoit au moins une partie des particules de masse active oxydo-réductrice issues de la première zone qui libèrent le dioxygène gazeux évacué dans le deuxième flux gazeux par une conduite de sortie située au sommet de ladite deuxième zone.

Selon un ou plusieurs modes de réalisation de l'invention, un troisième flux comportant une partie de ladite masse active oxydo-réductrice est formé et extrait du fond dudit dispositif d'étanchéité pour être à nouveau envoyé dans la zone d'oxydation.

Selon un ou plusieurs modes de réalisation de l'invention, la masse active oxydo-réductrice envoyée dans le dispositif d'étanchéité est préalablement séparée du gaz oxydant déplété en oxygène issu de la zone d'oxydation au sein d'un cyclone positionné entre la zone d'oxydation et le dispositif d'étanchéité.

Selon un ou plusieurs modes de réalisation de l'invention, la charge hydrocarbonée est une charge solide sous forme de particules, choisie de préférence dans la liste constituée par le charbon, le coke, le petcoke, la biomasse, les sables bitumineux et les déchets ménagers, et le procédé comprend en outre :
- la séparation, dans un séparateur solide/solide opérant en lit fluidisé et positionné en sortie de la zone de réduction, entre les particules de ladite masse active oxydo-réductrice et des particules d'imbrûlés générées par la combustion de la dite charge hydrocarbonée solide contenues dans un premier mélange gaz-solide issu de ladite zone de réduction, le séparateur solide/solide opérant en lit fluidisé, puis
- la séparation, dans un séparateur gaz/solide positionné en aval du séparateur solide/solide, entre les particules d'imbrûlés et la phase gaz contenues dans un deuxième mélange gaz-solide issus du séparateur solide/solide, un flux comportant les particules d'imbrûlés étant de préférence envoyé dans ladite zone de réduction, et la phase gaz formant les fumées de combustion.

Selon un premier aspect, la présente invention propose une pour réaliser le procédé de combustion d'une charge hydrocarbonée par oxydo-réduction en boucle chimique selon l'invention, comportant :
- une zone de réduction configurée pour opérer en lit fluidisé et effectuer la combustion de ladite charge hydrocarbonée par mise en contact avec une masse active oxydo-réductrice sous forme de particules ;
- une zone d'oxydation configurée pour opérer en lit fluidisé et effectuer l'oxydation de la masse active oxydo-réductrice issue de la zone de réduction par mise en contact avec un gaz oxydant, de préférence de l'air ;
- une ligne de transport de la masse active oxydo-réductrice de la zone d'oxydation vers la zone de réduction, ladite ligne de transport comportant un dispositif d'étanchéité configuré pour opérer en lit fluidisé double au moyen d'un gaz de fluidisation neutre et pour former au moins un premier flux comportant au moins une partie de la masse active oxydo-réductrice à destination de la zone de réduction et un deuxième flux gazeux comportant une partie du gaz de fluidisation neutre et du dioxygène gazeux libéré par la masse active oxydo-réductrice, le dispositif d'étanchéité comportant une conduite de sortie pour le deuxième flux gazeux (6);
- une ligne de recycle d'une partie des fumées de combustion dans la zone de réduction,

ladite ligne de recycle étant connectée à la conduite sortie du deuxième flux gazeux du dispositif d'étanchéité de manière à mélanger le deuxième flux gazeux avec ladite partie des fumées de combustion et former un flux de recycle des fumées de combustion, et
la ligne de recycle comportant un système de refroidissement, de compression et de chauffage du flux de recycle des fumées de combustion avant son envoi dans la zone de réduction.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Liste des figures

La figure 1 illustre l'installation et le procédé CLC selon un premier mode de réalisation de l'invention.
La figure 2 illustre l'installation et le procédé CLC selon un deuxième mode de réalisation de l'invention.
La figure 3 est un exemple de profil de relargage d'oxygène gazeux par effet CLOU d'un porteur d'oxygène à base d'oxyde de manganèse.

Sur les figures, les mêmes références désignent des éléments identiques ou analogues.

### Description des modes de réalisation

Des modes de réalisation de l'invention vont maintenant être décrits en détail. Dans la description détaillée suivante, de nombreux détails spécifiques sont exposés afin de fournir une compréhension plus approfondie de l'invention. Cependant, il apparaîtra à l'homme du métier que l'invention peut être mise en œuvre sans ces détails spécifiques. Dans d'autres cas, des caractéristiques bien connues n'ont pas été décrites en détail pour éviter de compliquer inutilement la description.

La présente invention concerne un procédé CLC, et une installation CLC mettant en œuvre un tel procédé, comportant la récupération d'oxygène gazeux libéré par le porteur d'oxygène dans un dispositif d'étanchéité positionné sur le trajet du porteur depuis le réacteur d'oxydation vers le réacteur de combustion. L'oxygène gazeux récupéré est mélangé avec une partie des fumées de combustion destinées à être recyclées au réacteur de combustion. L'oxygène gazeux permet alors la combustion d'espèces imbrûlées résiduelles issues de la dévolatilisation/gazéification d'une charge solide ou de la non-conversion d'une fraction de la charge hydrocarbonée gazeuse, que peuvent contenir les fumées de combustion, et/ou la combustion de la charge hydrocarbonée dans le réacteur de combustion.

Plus précisément, le procédé selon l'invention est un procédé de combustion d'une charge hydrocarbonée par oxydo-réduction en boucle chimique dans lequel une masse active oxydo-réductrice sous forme de particules circule entre une zone d'oxydation et une zone de réduction opérant en lit fluidisé, qui comporte :
- la combustion de la charge hydrocarbonée par mise en contact avec la masse active oxydo-réductrice dans la zone de réduction;
- l'oxydation de la masse active oxydo-réductrice issue de ladite zone de réduction par mise en contact avec un gaz oxydant, de préférence de l'air, dans la zone d'oxydation;
- l'envoi de la masse active oxydo-réductrice oxydée dans au moins un dispositif d'étanchéité opérant en lit fluidisé double, positionné en aval de ladite zone d'oxydation sur une ligne de transport de ladite masse active oxydo-réductrice vers ladite zone de réduction, le dispositif d'étanchéité étant alimenté par au moins un gaz de fluidisation neutre, de manière à former au moins un premier flux comportant au moins une partie de ladite masse active oxydo-réductrice envoyé vers ladite zone de réduction et un deuxième flux gazeux comportant une partie du gaz de fluidisation neutre et du dioxygène gazeux libéré par la masse active oxydo-réductrice ;
- le mélange du deuxième flux gazeux avec une partie des fumées de combustion de manière à former un flux de recycle des fumées de combustion envoyé au moins en partie, après avoir été successivement refroidi, comprimé, et réchauffé, dans ladite zone de réduction pour son opération en lit fluidisé.

Dans la présente description, les expressions « porteur d'oxygène » ou «masse active oxydo-réductrice» ou de manière abrégée « masse active », «matériau transporteur d'oxygène», ou « solide porteur d'oxygène » sont équivalentes. La masse oxydo-réductrice est dite active en rapport avec ses capacités réactives, dans le sens où elle est apte à jouer son rôle de transporteur d'oxygène dans le procédé CLC en captant et libérant de l'oxygène.

Il convient de noter que, de manière générale, les termes oxydation et réduction sont utilisés en relation avec l'état respectivement oxydé ou réduit de la masse active. Le réacteur d'oxydation, aussi appelé réacteur air, est celui dans lequel la masse active oxydo-réductrice est oxydée, et le réacteur de réduction, aussi appelé réacteur fuel ou réacteur de combustion, est le réacteur dans lequel la masse active oxydo-réductrice est réduite. Les réacteurs opèrent en lit fluidisé et la masse active circule entre le réacteur d'oxydation et le réacteur de réduction. La technologie du lit fluidisé circulant est utilisée pour permettre le passage continu de la masse active de son état oxydé dans le réacteur d'oxydation à son état réduit dans le réacteur de réduction.

Par oxygène gazeux, on entend l'oxygène moléculaire ou dioxygène (O₂).

Dans la suite de la description et dans les revendications, les positions (« fond », « sommet », « au-dessus », « en-dessous », « horizontal », « vertical », « moitié inférieure », etc.) des différents éléments sont définies par rapport aux dispositifs dans leur position de fonctionnement.

### Le procédé et l'installation CLC selon l'invention

Avant de décrire plus en détail le procédé et l'installation CLC selon l'invention, le principe de la combustion en boucle chimique, qui s'applique dans le cadre de la présente invention, est rappelé ci-après.

Dans le procédé CLC, le porteur d'oxygène sous forme de particules circule entre au moins une zone de réduction et une zone d'oxydation opérant toutes les deux en lit fluidisé.

La charge hydrocarbonée traitée peut être une charge hydrocarbonée solide, liquide ou gazeuse : combustibles gazeux (ex.: gaz naturel, syngas, biogaz, gaz de schiste), liquides (ex.: fuel, bitume, diesel, essences, huile de schiste, etc.), ou solides (ex.: charbon, coke, coke de pétrole appelé « petcoke » en anglais, biomasse, sables bitumineux, déchets ménagers, etc.).

Le procédé et l'installation CLC selon l'invention sont particulièrement bien adaptés à la combustion d'une charge hydrocarbonée solide, bien que ne se limitant pas aux charges solides. En effet, le procédé et l'installation CLC selon l'invention permettent la récupération d'oxygène gazeux pouvant être utilisé pour réaliser la combustion d'espèces imbrûlées résiduelles contenues dans les fumées de combustion recyclées dans la zone de réduction. Ces espèces imbrûlées résiduelles proviennent d'une combustion qui n'est pas tout à fait complète dans la zone de réduction, ce qui est plus fréquent dans le cas de la combustion de charges solides.

Le principe de fonctionnement du procédé CLC selon l'invention est le suivant : un solide porteur d'oxygène réduit est mis au contact d'un flux d'air, ou tout autre gaz oxydant, dans une zone réactionnelle appelée zone d'oxydation ou réacteur air (ou encore réacteur d'oxydation). Il en résulte un flux d'air appauvri (ou de gaz oxydant appauvri en oxygène) et un flux de particules du porteur d'oxygène oxydé. Le flux de particules de porteur d'oxygène oxydé est transféré dans une zone de réduction aussi appelée réacteur fuel (ou réacteur de réduction ou encore réacteur de combustion). Le flux de particules est mis au contact d'un combustible, typiquement une charge hydrocarbonée tel que décrite plus haut. Il en résulte un effluent de combustion, aussi communément appelé fumées de combustion, et un flux de particules de porteur d'oxygène réduit. L'installation CLC peut comprendre divers équipements, pour l'échange de chaleur, la mise en pression, l'étanchéité gaz entre les zones de réduction et d'oxydation, la séparation ou les éventuelles recirculations de matière autour des zones d'oxydation et de réduction.

Dans la zone de réduction, la charge hydrocarbonée est mise en contact, de préférence à co-courant, avec le porteur d'oxygène sous forme de particules pour réaliser la combustion de ladite charge par réduction du porteur d'oxygène. Le porteur d'oxygène est réduit par l'intermédiaire de la charge hydrocarbonée, qui est corrélativement oxydée en CO₂ et H₂O, ou éventuellement en mélange CO + H₂ (gaz de synthèse) selon les proportions de porteur d'oxygène et de charge hydrocarbonée utilisées. La combustion de la charge au contact du porteur d'oxygène est réalisée à une température généralement comprise entre 600°C et 1200°C, préférentiellement entre 750°C et 1100°C, et plus préférentiellement entre 800°C et 1100°C. Le temps de contact peut varier selon le type de charge hydrocarbonée utilisée. Il peut typiquement varier entre 1 seconde et 10 minutes, de préférence entre 1 et 8 minutes pour une charge solide ou liquide, et de préférence de 1 à 20 secondes pour une charge gazeuse.

Un mélange comprenant les gaz issus de la combustion (fumées de combustion) et les particules du solide porteur d'oxygène est évacué, typiquement au sommet de la zone de réduction. Des moyens de séparation de gaz/solide, tels qu'un cyclone, permettent de séparer d'une part les gaz de combustion et d'autres part les particules solides du porteur d'oxygène dans leur état le plus réduit. Ces dernières sont envoyées vers la zone d'oxydation pour être ré-oxydées, à une température généralement comprise entre 600°C et 1200°C, préférentiellement entre 750°C et 1100°C, et plus préférentiellement entre 800°C et 1100°C.

Dans le réacteur d'oxydation, le porteur d'oxygène est restauré à son état oxydé au contact de l'air (ou d'un autre gaz oxydant), avant de retourner vers la zone de réduction, et après avoir été séparé de l'air appauvri en oxygène (ou du gaz oxydant appauvri en oxygène) évacué au sommet de la zone d'oxydation.

Le solide porteur d'oxygène, passant alternativement de sa forme oxydée à sa forme réduite et inversement, décrit un cycle d'oxydo-réduction.

Les réactions (1) et (2) ci-dessous décrivent respectivement la réduction du porteur d'oxygène comportant un oxyde métallique (MₓO_{y}) généralement supporté sur une céramique, M représentant un métal, au contact d'une charge hydrocarbonée, e.g. un hydrocarbure de formule CₙHₘ, et son oxydation au contact d'un gaz oxydant, e.g. de l'air.

[Chem 1] CₙHₘ + MₓO_{y} → n CO₂+ m/2 H₂O + MₓO_{y-2n-m/2} (1)

[Chem 2] MₓO_{y-2n-m/2} + (n+m/4) O₂ → MₓO_{y} (2)

Dans la zone de réduction, le porteur d'oxygène est réduit à l'état MₓO_{y-2n-m/2} au contact de la charge hydrocarbonée qui est corrélativement oxydé en CO₂ et H₂O, selon la réaction (1), ou éventuellement en mélange CO + H₂ selon la nature du porteur d'oxygène et les proportions utilisées.

Dans la zone d'oxydation, le porteur d'oxygène est restauré à son état oxydé MₓO_{y} au contact du gaz oxydant, e.g. l'air, selon la réaction (2), avant de retourner vers la zone de réduction.

Dans le cas où l'oxydation du porteur d'oxygène est réalisée par la vapeur d'eau, un flux d'hydrogène peut être obtenu en sortie du réacteur d'oxydation, selon la réaction (3).

[Chem 3] MₓO_{y-2n-m/2} + (2n+m/2) H₂O → MₓO_{y} + (2n+m/2) H₂ (3)

### Le porteur d'oxygène

En plus des propriétés d'oxydo-réduction requises pour les réactions d'oxydo-réduction au contact de la charge hydrocarbonée ou du gaz oxydant, et des caractéristiques nécessaires à la mise en œuvre de la fluidisation, le porteur d'oxygène utilisé dans le procédé et l'installation CLC selon l'invention a une capacité de libération d'oxygène gazeux par effet CLOU.

De tels porteurs d'oxygène, utilisables dans le procédé et l'installation CLC selon l'invention, sont connus, et des exemples en sont décrits dans Mattisson et al., 2009 ou Shafiefarhood et al. 2015, déjà cités plus haut, ou dans les demandes de brevet EP3558518 et EP3558515, ou encore dans la demande de brevet français déposée sous le numéro 20/08.189.

Le porteur d'oxygène est de préférence composé d'oxydes métalliques, tels que des oxydes de Cu (e.g. couple CuO/Cu₂O), Co (e.g. couple and Co₃O₄/CoO), Mn (e.g. couple Mn₂O₃/Mn₃O₄), des oxydes mixtes Co-Fe ou Mn-Fe par exemple sous forme de spinelles (structures cristallines spécifiques d'oxydes mixtes reproduisant la structure du spinelle minéral MgAl₂O₄), des pérovskites (structures cristallines spécifiques d'oxydes mixtes reproduisant la structure de la pérovskite minérale CaTiO₃) telles que CaMnO₃, seuls ou en mélange.

De tels composés peuvent provenir de minerais (par exemple la pyrolusite pour l'oxyde de Mn) ou être synthétiques (par exemple des particules d'oxyde de cuivre supporté sur une matrice alumine ou silice-alumine).

Ils peuvent être associés ou non à un liant ou un support, une telle association permettant notamment d'assurer une bonne réversibilité des réactions d'oxydation et de réduction, et améliorer la résistance mécanique des particules. En effet, les oxydes métalliques, choisis par exemple parmi les couples redox du Cu, du Mn, du Co, ou leurs mélanges, utilisés purs, c'est-à-dire sans liant ou support, peuvent montrer une diminution importante et rapide de leur capacité de transfert d'oxygène, due au frittage des particules métalliques, du fait des cycles d'oxydation/réduction successifs à haute température. De nombreux types de liants et supports ont été étudiés dans la littérature, afin d'augmenter la résistance mécanique des particules. Parmi ceux-ci, on peut citer l'alumine, les spinelles d'aluminate métallique, le dioxyde de titane, la silice, la zircone, la cérine, le kaolin, la bentonite, les pérovskites, etc.

Avantageusement, le porteur d'oxygène peut comporter au moins un oxyde de manganèse ou de cuivre, ou leurs mélanges, et de préférence au moins un oxyde de cuivre, et plus préférentiellement associé(s) à un liant ou un support, par exemple un support d'alumine (Al₂O₃), de silice (SiO₂), alumino-silicique (mélange d'alumine Al₂O₃ et de silice SiO₂), d'aluminates métalliques, de silicates, de silicates d'aluminium, d'aluminosilicates, de dioxyde de titane, de pérovskites, de zircone, de tectosilicates tels que des feldspaths choisi parmi la celsiane, la slawsonite, l'anorthite, ou des feldspathoïdes comme la kalsilite, ou un mélange d'un tectosilicate comme précédemment cité avec un oxyde comme précédemment cité (alumine, aluminates métalliques, silice, silicates, silicates d'aluminium, aluminosilicates, dioxyde de titane, pérovskites, zircone).

Selon un ou plusieurs modes de réalisation, le porteur d'oxygène peut comporter au moins un oxyde de manganèse ou de cuivre, et de préférence au moins un oxyde de cuivre, associé de préférence à un support, et plus préférentiellement un support d'alumine (Al₂O₃), de silice (SiO₂), alumino-silicique (mélange d'alumine Al₂O₃ et de silice SiO₂), de feldspaths tels que la celsiane, la slawsonite, l'anorthite ou de feldspathoïdes tel que la kalsilite.

Selon un ou plusieurs modes de réalisation, le porteur d'oxygène peut comporter au moins un oxyde de manganèse, et est par exemple constitué par de la pyrolusite, qui est une variété naturelle (minerai) de dioxyde de manganèse, MnO₂, aussi connue sous le nom oxyde de manganèse (IV).

Selon un ou plusieurs modes de réalisation, le porteur d'oxygène peut comporter, et de préférence peut être constitué par, de l'oxyde de cuivre supporté sur alumine (CuO/Al₂O₃).

Les particules de porteur d'oxygène associant un ou plusieurs oxydes métalliques et un support peuvent présenter une porosité initiale (avant toute utilisation dans le procédé CLC) spécifique jouant un rôle dans les performances du porteur d'oxygène, notamment améliorer la durée de vie des particules dans le procédé CLC. C'est le cas par exemple pour les porteurs d'oxygènes divulgués dans les demandes de brevet EP3558515 et EP3558518, et décrits ci-dessous.

Selon un ou plusieurs modes de réalisation, le porteur d'oxygène peut comporter, et de préférence peut être constitué par, tel que décrit dans la demande de brevet EP3558515, de l'oxyde de cuivre, formant de préférence entre 5% et 75% en poids dudit porteur d'oxygène, et un support en céramique au sein duquel est dispersé l'oxyde de cuivre, formant de préférence entre 25% et 95% en poids dudit porteur d'oxygène, et consistant en de l'aluminate de calcium (CaAl₂O₄), de la silice (SiO₂), du dioxyde de titane (TiO₂), de la pérovskite (CaTiO₃), de l'alumine (Al₂O₃), de la zircone (ZrO₂), du dioxyde d'yttrium (Y₂0₃), du zirconate de baryum (BaZrO₃), de l'aluminate de magnésium (MgAl₂O₄), du silicate de magnésium (MgSi₂O₄), ou de l'oxyde de lanthane (La₂O₃), de préférence de l'alumine ou un mélange d'alumine et de silice. Un tel porteur a une porosité telle que le volume poreux total est compris entre 0,05 et 1,2 ml/g, et de préférence entre 0,1 et 0,85 ml/g, le volume poreux des macropores constitue au moins 10%, et de préférence au moins 40%, du volume poreux total du porteur d'oxygène; et la distribution en taille des macropores au sein du porteur d'oxygène est comprise entre 50 nm et 7 µm, de préférence entre 50 nm et 3 µm. Un tel porteur d'oxygène est performant, en matière de capacité de transfert d'oxygène, de réactivité avec les différentes charges hydrocarbonées susceptibles d'être traitées, et de résistance mécanique. Il présente en particulier une durée de vie importante, permettant de diminuer les couts d'investissement et/ou d'opération pour de tels procédés.

Selon un ou plusieurs modes de réalisation, le porteur d'oxygène peut comporter, et de préférence peut être constitué par, tel que décrit dans la demande de brevet EP3558518, de l'oxyde de cuivre, formant de préférence entre 5% et 75% en poids dudit porteur d'oxygène, et un support en céramique au sein duquel est dispersé l'oxyde de cuivre, formant de préférence entre 25% et 95% en poids dudit porteur d'oxygène, et comportant entre 60% et 100% poids d'au moins un feldspath ou un feldspathoïde ayant une température de fusion supérieure à 1500°C, de préférence choisi parmi la celsiane, la slawsonite, l'anorthite, et la kalsilite, plus préférentiellement la celsiane, et entre 0% et 40% d'au moins un oxyde choisi parmi l'alumine, les aluminates métalliques, la silice, les silicates, les aluminosilicates, le dioxyde de titane, les pérovskites, la zircone. Un tel porteur a une porosité telle que le volume poreux total est compris entre 0,05 et 0,9 ml/g, et de préférence entre 0,1 et 0,5 ml/g, le volume poreux des macropores constitue au moins 10%, et de préférence au moins 50%, du volume poreux total du porteur d'oxygène; et la distribution en taille des macropores au sein du porteur d'oxygène est comprise entre 50 nm et 7 µm, de préférence entre 50 nm et 4 µm. Un tel porteur d'oxygène est également performant, en matière de capacité de transfert d'oxygène, de réactivité avec les différentes charges hydrocarbonées susceptibles d'être traitées, et de résistance mécanique. Il présente en particulier une durée de vie importante, permettant de diminuer les couts d'investissement et/ou d'opération pour de tels procédés.

On rappelle que selon la nomenclature de l'IUPAC, on parle de micropores pour les pores dont la taille (l'ouverture) est inférieure à 2 nm, de mésopores pour les pores dont la taille est comprise entre 2 nm et 50 nm, et de macropores pour les pores de taille supérieure à 50 nm. On entend par volume poreux total, le volume mesuré par intrusion au porosimètre à mercure selon la norme ASTM D4284-83, (mesure du volume de mercure injecté lorsque la pression exercée augmente de 0,22 MPa à 413 MPa). Le volume des macropores est mesuré par porosimétrie par intrusion de mercure selon la même norme (on fixe à 0,2 MPa la valeur à partir de laquelle le mercure remplit tous les vides intergranulaires, et on considère qu'au-delà le mercure pénètre dans les pores de l'échantillon). La distribution en taille des macropores au sein des particules est mesurée par porosimétrie au mercure.

Selon un ou plusieurs modes de réalisation, le porteur d'oxygène peut comporter, et de préférence peut être constitué par, tel que décrit dans la demande de brevet français déposée sous le numéro 20/08.189 , du cuivre à une teneur totale X comprise entre 5% et 39% exprimée en poids d'oxyde de cuivre par rapport au poids total du porteur d'oxygène sous sa forme oxydée, et un support en céramique au sein duquel est dispersé le cuivre, le support comportant un premier spinelle sous-stœchiométrique de formule MgₐAl_{b}O4, et/ou un deuxième spinelle sous-stœchiométrique de formule Cu_{c}Mg_{d}AlₑO₄, avec a, b, c, d, et e décrit selon les formules suivantes : a= 4 / [ 1 + ( 3 * ( ( ( 100 - X ) / Y ) - 1) ) x M_{MgO} / M_{Al2O3}], b = (8 * (100-X-Y)) / [ Y * M_{Al2O3} / M_{MgO} + 3 x ( 100 - X - Y) ], c = (4 * X) / [ M_{CuO} * ( (X / M_{CuO} ) + ( Y / M_{MgO} ) + 3 * ( 100 - X - Y ) / M_{Al2O3})), d = (4 * Y) / [ M_{MgO} * ( (X / M_{CuO} ) + ( Y / M_{MgO} ) + 3 * ( 100 - X - Y ) / M_{Al2O3})], e = (8 * ( 100 - X - Y ) ) / [ M _{Al2O3} * ( (X / M_{CuO} ) + ( Y / M_{MgO} ) + 3 * ( 100 - X - Y ) / M_{Al2O3})],

M_{MgO}, M_{CuO}, M_{Al2O3} étant les masses molaires respectives de MgO, CuO et Al₂O₃, Y étant la quantité de MgO en pourcentage poids du porteur d'oxygène, avec X compris entre 5% et 39%, Y compris entre 1% et 23%, et Y < -0,6342X + 26,223. Un tel porteur d'oxygène est un autre exemple de porteur d'oxygène ayant un bonne résistance mécanique, ce qui lui permet d'avoir une durée de vie importante et ainsi diminuer les couts d'investissement et/ou d'opération du procédé, tout en étant performant en matière de capacité de transfert d'oxygène et de réactivité avec les différents types de charges hydrocarbonées à traiter.

La capacité de stockage en oxygène du porteur d'oxygène peut être avantageusement comprise, suivant le type de matériau, entre 1 % et 15 % poids. Elle s'entend comme la masse d'oxygène correspondant à la transition entre l'état le plus réduit du porteur d'oxygène et son état le plus oxydé, elle est par exemple de 10% quand rapportée à la masse de CuO mise en œuvre dans le cas du couple CuO/Cu₂O. Dans le cas où le porteur d'oxygène est supporté sur un support inerte, la capacité de stockage est ramenée à la masse de l'ensemble formé par le support et la phase active, soit 3% pour l'exemple CuO/Cu₂O si cette phase active représente 30% de CuO dispersé dans un support. Avantageusement, la quantité d'oxygène effectivement transférée par l'oxyde métallique est comprise entre 1 et 3 % poids, typiquement 2% poids, ce qui permet de n'utiliser qu'une fraction de la capacité de stockage d'oxygène, idéalement moins de 30 % de celle-ci afin de limiter les risques de vieillissement mécanique ou d'agglomération des particules. Dans le cas de porteurs d'oxygène composés d'une phase active supportée, la dégradation des propriétés mécaniques et l'agglomération des particules sont limitées, et on peut monter plus haut en utilisation de l'oxygène, jusque 100% de la capacité. L'utilisation d'une fraction seulement de la capacité de stockage d'oxygène a également pour avantage que le lit fluidisé joue un rôle de ballast thermique et lisse ainsi les variations de températures sur le parcours du lit.

Selon l'invention, le porteur d'oxygène est capable de libérer une partie de l'oxygène qu'il contient sous forme d'oxygène gazeux sous certaines conditions dans le procédé CLC, typiquement lorsqu'il est soumis à une atmosphère à faible pression partielle d'oxygène pendant un temps suffisant. L'autre partie de l'oxygène sous forme atomique dans le porteur d'oxygène peut être utilisée lors de réactions de réduction au contact de la charge hydrocarbonée. C'est ce qui est appelé ici capacité de libération d'oxygène gazeux par effet CLOU.

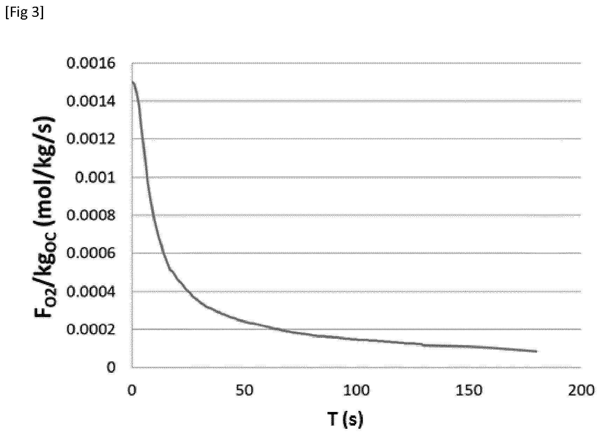

Il en général possible d'établir expérimentalement un profil de relargage de l'oxygène gazeux en fonction du temps pour un porteur d'oxygène donné, lorsqu'il est soumis, sous sa forme la plus oxydée, à une atmosphère inerte, typiquement composée d'azote ou de gaz rares, en mesurant l'oxygène produit en fonction du temps. La figure 3 illustre par exemple le profil de relargage de l'oxygène gazeux d'un porteur d'oxygène formé d'oxydes de manganèse, détaillé à l'exemple 1.

Typiquement, le porteur d'oxygène utilisé dans le procédé et l'installation CLC selon l'invention est capable de libérer de l'oxygène gazeux, sous une atmosphère à faible pression partielle d'oxygène, c'est-à-dire contenant entre 0 et 2% vol. d'oxygène, de préférence inférieur à 2% vol. d'O₂, et plus préférentiellement inférieur à 1% vol. d'O₂, par exemple de l'azote pur, du CO₂, de la vapeur d'eau, ou un mélange de CO₂ et de vapeur d'eau, aux conditions de température et pression du procédé CLC, comme c'est le cas, par exemple pour des fumées de combustion recyclées.

Dans ces conditions, le porteur d'oxygène utilisé dans le procédé et l'installation CLC selon l'invention, est de préférence capable de libérer l'oxygène gazeux très rapidement.

Typiquement, la majeure partie, voire plus de 80% ou même 90%, de l'oxygène gazeux qu'il est capable de relarguer peut être atteinte au bout de quelques minutes, par exemple entre 1 minute et 15 minutes, de préférence entre 1 minutes et 10 minutes, et plus préférentiellement entre 1 minute et 5 minutes.

Par atmosphère « neutre » ou « inerte » vis-à-vis du porteur d'oxygène, on entend une atmosphère ne présentant pas de possibilité de réaction chimique spontanée, dans les conditions du test, des gaz qui la composent avec le porteur d'oxygène.

La forme et la taille des particules sont avantageusement adaptées à une mise en œuvre en lit fluidisé. Le porteur d'oxygène peut être sous la forme de particules fluidisables, appartenant aux groupes A, B ou C de la classification de Geldart, basée sur la taille des particules et sur leur écart de masse volumique avec le gaz, (D. Geldart. « Types of gas fluidization ». Powder Technol. 7(5), 1973, p.285-292). De préférence les particules du porteur d'oxygène appartiennent au groupe A ou au groupe B, et plus préférentiellement au groupe B, de la classification de Geldart.

De préférence, les particules du solide porteur sont sensiblement sphériques, ou peuvent être de toute forme analogue.

De manière préférée, les particules du porteur d'oxygène ont une granulométrie telle que plus de 90% des particules ont une taille comprise entre 50 µm et 600 µm, plus préférentiellement une granulométrie telle que plus de 90% des particules ont une taille comprise entre 80 µm et 400 µm, encore plus préférentiellement une granulométrie telle que plus de 90% des particules ont une taille comprise entre 100 µm et 300 µm, et encore plus préférentiellement une granulométrie telle que plus de 95% des particules ont une taille comprise entre 100 µm et 300 µm.

La taille des particules peut être mesurée par granulométrie laser. La distribution en taille des particules du solide porteur d'oxygène est de préférence mesurée à l'aide d'un granulomètre laser, par exemple Malvern Mastersizer 3000^{®}, de préférence en voie liquide, et en utilisant la théorie de Fraunhofer.

De préférence, les particules du porteur d'oxygène ont une densité de grain comprise entre 500 kg/m³ et 5000 kg/m³, de préférence une densité de grain comprise entre 800 kg/m³ et 4000 kg/m³, et encore plus préférentiellement une densité de grain comprise entre 1000 kg/m³ et 3000 kg/m³.

### Utilisation d'oxygène gazeux libéré par effet CLOU

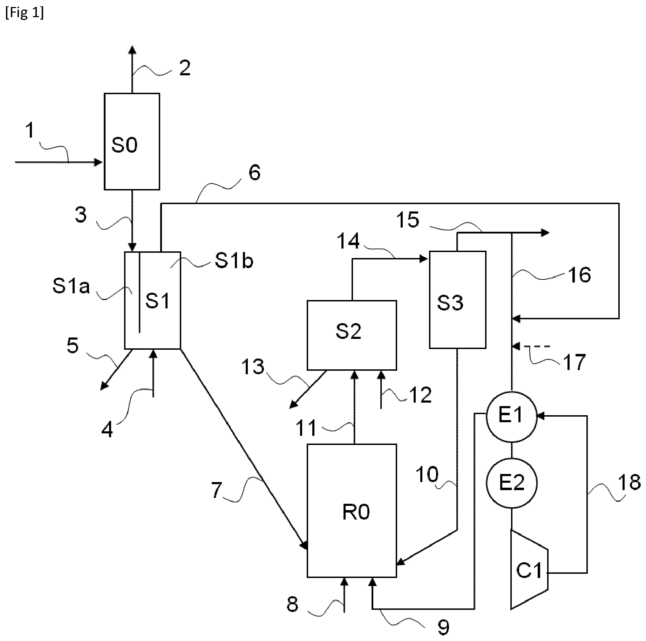

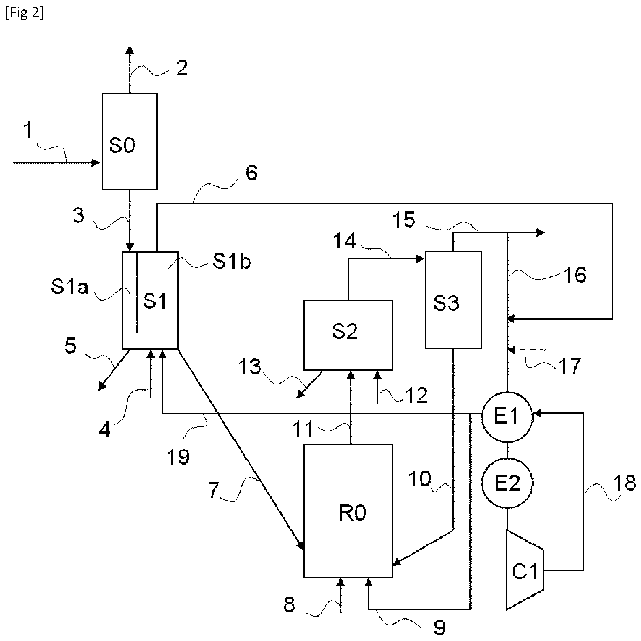

Le procédé et l'installation CLC selon l'invention sont notamment décrits ci-dessous en relation avec les figures 1 et 2, qui représentent schématiquement deux modes de réalisation de l'invention non limitatifs de l'invention.

La figure 1 est un schéma illustrant l'installation et le procédé CLC selon un premier mode de réalisation de l'invention. Seule une partie de l'installation CLC est représentée par souci de simplification : la zone d'oxydation n'est pas représentée car non nécessaire pour une meilleure compréhension de l'invention, la présente invention portant plus spécifiquement sur la connexion fluidique entre ladite zone d'oxydation et le réacteur de combustion, et le fonctionnement du réacteur de combustion comportant un recyclage des fumées de combustion. Le schéma de la figure 1 est un schéma de principe, dans lequel par exemple les emplacements des flux les uns par rapports aux autres ne présupposent pas de leur implantation spatiale sur une installation CLC effective, sauf mention spécifique dans la description.

La figure 1 représente un mode de réalisation de l'invention dans lequel la charge hydrocarbonée 8 est solide, et par exemple choisie dans la liste constituée par le charbon, le coke, le petcoke, la biomasse, les sables bitumineux et les déchets ménagers. Cependant la présente invention n'est pas limitée à la combustion de charges solides. L'invention comporte d'autres modes de réalisation plus adaptés à la combustion de charges gazeuses ou liquides, qui ne comprennent pas nécessairement tous les éléments représentés à la figure 1, ou au contraire qui comportent des éléments non représentés dans la figure 1 mais bien connus de l'homme du métier. Par exemple, le séparateur solide/solide S2 n'est pas nécessaire dans le cas de la combustion de charges gazeuses ou liquides.

Le procédé CLC selon l'invention comporte la combustion d'une charge hydrocarbonée 8 par mise en contact avec le porteur d'oxygène 7 dans la zone de réduction R0, et l'oxydation du porteur d'oxygène issu de la zone de réduction R0 par mise en contact avec un gaz oxydant, de préférence de l'air, dans la zone d'oxydation (non représentée).

Selon l'invention, on envoie le porteur d'oxygène oxydé 3 dans au moins un dispositif d'étanchéité S1 opérant en lit fluidisé double, positionné en aval de la zone d'oxydation sur une ligne de transport du porteur d'oxygène vers ladite zone de réduction R0. Le dispositif d'étanchéité S1 permet en effet d'assurer l'étanchéité gaz entre la zone d'oxydation et la zone de réduction. Il s'agit d'un dispositif d'étanchéité gaz non mécanique (« non-mechanical gas-sealing device » en anglais), décrit en détail plus loin. Le porteur d'oxygène 3 est dans son état oxydé car provenant de la zone d'oxydation. Le dispositif d'étanchéité S1 est alimenté par au moins un gaz de fluidisation neutre 4, de manière à former au moins un premier flux 7 comportant au moins une partie du porteur d'oxygène, ledit flux 7 étant envoyé vers la zone de réduction R0, et un deuxième flux 6 qui est gazeux et qui comporte une partie du gaz de fluidisation neutre 4 et de l'oxygène gazeux libéré par le porteur d'oxygène.

Le flux gazeux 6, contenant de l'oxygène gazeux libéré par le porteur, est mélangé avec une partie 16 des fumées de combustion 15 pour former un flux de recycle des fumées de combustion 9 envoyé au moins en partie, après avoir été successivement refroidi, comprimé, et réchauffé, dans la zone de réduction R0 pour son opération en lit fluidisé.

Le recyclage d'une partie des fumées de combustion dans la zone de réduction R0 permet à celle-ci d'opérer en lit fluidisé, sans qu'il soit nécessaire d'utiliser un autre gaz de fluidisation, ou au moins en réduisant les besoins en un gaz de fluidisation complémentaire, en particulier de la vapeur d'eau additionnelle.

Les fumées de combustion 15 peuvent contenir des espèces imbrûlées résiduelles, qui sont des espèces gazeuses, typiquement du CO et/ou de l'H₂ et/ou du CH₄, issues de la zone de réduction R0. Le mélange du flux gazeux 6 avec une partie 16 desdites fumées 15 permet dans ce cas d'effectuer la combustion desdites espèces imbrûlées résiduelles des fumées 15.

Par espèces imbrûlées résiduelles, on entend les composés gazeux produits lors d'une combustion incomplète de la charge, principalement les composés gazeux imbrûlés, e.g. CO et/ou H₂, issus de la conversion de la charge au contact de l'eau (dévolatilisation/gazéification d'une charge solide ou liquide et reformage du méthane, produisant du CO et de l'H₂) ou une fraction de la charge hydrocarbonée gazeuse non convertie, e.g. du CH₄.

Les espèces imbrûlées résiduelles que peuvent contenir les fumées sont en effet susceptibles d'endommager le compresseur C1 utilisé pour le recyclage des fumées de combustion dans la zone de réduction R0. Le compresseur de recycle a pour fonction de remonter en pression les fumées issues de la combustion de sorte à les amener à une pression suffisante pour vaincre la perte de charge du réacteur fuel (principalement induite par le lit fluidisé et les distributeurs) et ainsi pouvoir les introduire dans le réacteur fuel comme gaz de fluidisation. Ainsi, la combustion des espèces imbrûlées résiduelles au moyen de l'oxygène gazeux récupéré dans le dispositif S1 permet de protéger ledit compresseur, sans avoir recours à un flux d'oxygène externe au procédé, ou du moins en réduisant les besoins en un tel flux d'oxygène externe 17 au procédé CLC, contribuant ainsi à limiter les coûts de fonctionnement du procédé CLC.

En plus de réaliser, au moins en partie, la combustion des espèces imbrûlées résiduelles que peuvent contenir les fumées, l'oxygène gazeux du flux gazeux 6 mélangé avec une partie 16 des fumées de combustion 15 peut aussi participer à la combustion de la charge dans la zone de réduction s'il n'a pas été consommé entièrement lors de la combustion espèces imbrûlées résiduelles dans le circuit de recyclage des fumées de combustion. L'oxygène gazeux pouvant ainsi subsister dans le flux de recycle des fumées de combustion 9 envoyé à la zone de réduction R0 réagit avec la charge hydrocarbonée, améliorant les performances de combustion notamment du fait de la rapidité des réactions gaz/gaz. Par ailleurs, l'oxygène gazeux accélérant la gazéification de la charge (gazéification plus rapide avec O₂ qu'avec H₂O), il est possible de réduire le temps de séjour de la charge dans la zone de réduction, ce qui peut se traduire par un dimensionnement plus petit du réacteur fuel requérant un volume plus petit pour le lit dense, et in fine limiter les coûts d'investissements pour l'installation CLC.

Dans la zone de réduction R0, le flux 7 de porteur d'oxygène provenant du dispositif S1, ainsi que la charge hydrocarbonée 8, sont donc mis en contact au sein d'un lit fluidisé par un gaz de fluidisation comportant au moins une partie du flux de recycle des fumées de combustion 9 conditionné, assurant également la gazéification de la charge hydrocarbonée solide.

La zone de réduction R0 est configurée de sorte qu'une combustion complète de la charge hydrocarbonée, en particulier des espèces gazeuses de la charge, est recherchée. Les fumées de combustion sont ainsi essentiellement composées d'un mélange de CO₂ et d'H₂O. Cependant, les fumées de combustion peuvent aussi contenir une petite quantité d'espèces imbrûlées résiduelles comme expliqué plus haut, notamment de CO + H₂ (gaz de synthèse), issues de la zone de réduction, formées lors de la combustion incomplète d'une partie de la charge, qui peut tout particulièrement se produire dans le cas d'utilisation de charges hydrocarbonées solides.

La zone de réduction R0 peut fonctionner en lit fluidisé dense ou en lit fluidisé transporté ou bien encore selon un agencement de lits constitués d'une phase dense et d'une phase transportée. De manière avantageuse, la vitesse du gaz dans la partie supérieure de la zone de réduction R0 est comprise entre 1 m/s et 10 m/s.

Un mélange 11 comportant les gaz issus de la combustion (y compris les éventuelles espèces gazeuses imbrûlées résiduelles) et les particules du porteur d'oxygène, ainsi que du gaz de fluidisation et des particules solides d'imbrûlés issues de la charge solide non convertie (particules d'imbrûlés), est évacué au sommet de la zone de réduction R0 pour être envoyé vers un séparateur solide/solide S2, fluidisé par un gaz de fluidisation 12, permettant d'isoler le porteur d'oxygène réduit des autres composés. En particulier, le séparateur solide/solide S2 permet de séparer les particules d'imbrûlés des particules du porteur d'oxygène. Un tel séparateur solide / solide est connu et par exemple décrit dans la demande internationale WO2011151535. Il comporte de préférence une enceinte avec une conduite d'admission du mélange 11 débouchant dans une phase diluée en partie supérieure de l'enceinte, une conduite d'évacuation située en partie inférieure de l'enceinte et une conduite de sortie située en partie supérieure de l'enceinte. Les paramètres d'admission et d'évacuation/sortie sont choisis pour créer dans l'enceinte une phase dense en partie inférieure et la phase diluée en partie supérieure (taux de solide généralement inférieur à 5%, voire à 1%). Dans le séparateur S2, la vitesse superficielle de l'écoulement gazeux est avantageusement supérieure à la vitesse terminale de chute des particules de combustible imbrûlées pour permettre leur entraînement avec le gaz, permettant ainsi de procéder à une séparation "rapide" entre les particules lourdes (porteur d'oxygène) et les particules légères (particules d'imbrûlés). Par séparation rapide, on entend une séparation s'opérant en moins de 1 minute et préférentiellement en moins de 20 secondes, cette durée correspondant au temps de séjour des particules légères dans la phase diluée du séparateur. Un flux 13 de porteur d'oxygène réduit séparé dans le séparateur S2 est envoyé vers le réacteur air, tandis qu'un autre flux 14 comportant les autres composés, y compris les particules d'imbrûlés, est envoyé vers un séparateur gaz/ solide S3, typiquement un cyclone, permettant de séparer les gaz des particules d'imbrûlés, et former un flux 10 desdites particules d'imbrulés envoyé vers la zone de réduction R0, pour leur combustion. Un ou plusieurs autres séparateurs gaz/solide peuvent être disposés en aval du séparateur S3 pour une réaliser une séparation plus poussée.

Le mélange du flux gazeux 6 avec une partie 16 des fumées 15 sortant du séparateur gaz/solide S3, formant le flux de recycle des fumées 9, s'effectue de préférence avant la compression du flux de recycle dans le compresseur C1, afin de brûler les espèces imbrûlées résiduelles, e.g. le gaz de synthèse, éventuellement contenues dans les fumées pour préserver ledit compresseur, et de préférence avant tout refroidissement du flux de recycle avant son passage dans le compresseur C1, de manière à opérer la combustion dans les meilleures conditions de température.

Avantageusement, le flux gazeux de recycle des fumées 9 est refroidi par passage dans au moins un premier échangeur de chaleur E1, puis ledit flux refroidi de recycle des fumées est comprimé dans le compresseur C1, puis ledit un flux de recycle des fumées de combustion refroidi et comprimé 18 est réchauffé par passage dans l'échangeur de chaleur E1 avant d'être envoyé au moins en partie vers la zone de réduction R0.

De préférence, le flux gazeux de recycle des fumées 9 est refroidi par passage dans une deuxième échangeur de chaleur E2 positionné entre le premier échangeur de chaleur E1 et le compresseur C1. La fonction de l'échangeur E2 est d'amener le flux de fumées recyclées à une température compatible avec le fonctionnement du compresseur choisi. Dans ce cas, il est possible d'effectuer le mélange du flux gazeux 6 avec la partie 16 des fumées de combustion 15 entre le premier échangeur de chaleur E1 et le deuxième échangeur de chaleur E2.

De préférence, le flux de recycle des fumées 9 est refroidi à une température comprise entre 70°C et 450°C, de préférence entre 70°C et 300°C, et plus préférentiellement entre 150°C et 300°C, en amont du compresseur C1, puis comprimé à une pression comprise entre 0,02 MPa et 0,3 MPa, puis réchauffé à une température comprise entre 300°C et 950°C. De préférence, la température maximale atteinte lors du chauffage des fumées comprimées est inférieure de 50°C par rapport à la température du mélange des flux 6 et 16, préférentiellement inférieure à 20°C.

De préférence, les fumées sont comprimées par le compresseur C1 à une pression supérieure d'environ 0,03 MPa à celle de la zone de réduction, notamment afin de compenser la perte de charge du distributeur.

Selon l'invention, l'oxygène gazeux libéré par le porteur d'oxygène dans le dispositif d'étanchéité S1 peut suffire à effectuer la combustion des espèces imbrûlées résiduelles, e.g. du CO et/ou de l'H₂, de la partie 16 des fumées 15 qui vont former le flux de recycle des fumées 9. Cependant, une injection de dioxygène frais 17, oxygène externe au procédé CLC, peut être réalisée dans la partie 16 des fumées de combustion 15 pour compléter la combustion desdites des espèces imbrûlées résiduelles effectuée avec l'oxygène gazeux apporté par le deuxième flux gazeux 6.

De préférence, le flux gazeux 6 issu du dispositif d'étanchéité S1 comporte entre 1% et 20% vol. d'oxygène gazeux, de préférence entre 1% et 16% vol., et plus préférentiellement entre 2% et 16% vol. Le porteur d'oxygène 3 envoyé dans le dispositif d'étanchéité S1 provient de préférence d'un flux 1 contenant le porteur directement issu de la zone d'oxydation (non représentée) et transporté par de l'air, ou un autre gaz oxydant, contenant de préférence entre 2% et 10% d'oxygène, et envoyé dans un séparateur gaz/solide S0, typiquement un cyclone. Le séparateur gaz/solide S0 sépare les espèces gazeuses et solides en un flux majoritairement gazeux 2, constitué d'air déplété aussi appelé air appauvri (ou de gaz oxydant appauvri en oxygène si un autre gaz oxydant que l'air est utilisé dans la zone d'oxydation), et un flux majoritairement solide comportant le porteur d'oxygène oxydé 3.

Le dispositif d'étanchéité S1 peut permettre de séparer le porteur d'oxygène en deux parties : une partie formant le premier flux 7, et une deuxième partie complémentaire formant un deuxième flux 5, de préférence extrait du fond du dispositif d'étanchéité S1, et qui est de nouveau envoyé vers la zone d'oxydation. Cette recycle 5 permet d'augmenter le temps de séjour moyen du porteur d'oxygène dans le réacteur air en augmentant le nombre moyen de passe. L'effet recherché est de maximiser le degré d'oxydation du porteur et ainsi se rapprocher de l'équilibre théorique déterminé entre le solide porteur d'oxygène et la pression partielle d'oxygène de l'atmosphère gazeuse en sortie de réacteur air. Il est ainsi possible de maximiser le degré d'oxydation du porteur d'oxygène, et de fait maximiser son potentiel d'effet CLOU.

Le dispositif d'étanchéité S1 permet d'assurer un maximum d'étanchéité gaz entre la zone d'oxydation et la zone de réduction, tout en permettant la libération d'oxygène gazeux du porteur d'oxygène formant le flux gazeux 6 contenant également du gaz de fluidisation 4, de préférence extrait par une conduite située en partie haute du dispositif d'étanchéité S1. Le gaz de fluidisation 4 utilisé n'est pas de l'air, mais est essentiellement constitué de vapeur d'eau, de CO₂, par exemple prélevé sur une chaine de compression du CO₂ en aval du procédé, ou d'un mélange de CO₂ et de vapeur d'eau entre 0% et 2% vol. d'O₂, de préférence moins de 2% vol. d'O₂. Lors de son séjour dans le dispositif S1, qui n'est pas fluidisé par de l'air, le porteur d'oxygène relargue une grande partie de son oxygène par effet CLOU. La pression partielle en oxygène est en effet très faible, voire nulle, ce qui permet cette libération d'oxygène gazeux du porteur d'oxygène, dans les conditions de température au sein du dispositif S1, qui sont proches de celles des zones d'oxydation et de réduction, typiquement, selon le porteur d'oxygène et la charge choisis, entre 600°C et 1200°C. De préférence, la température opérée dans le dispositif S1 est inférieure de 50°C à la température opérée dans la zone d'oxydation.

Le dispositif d'étanchéité S1 et son opération sont tels que la libération d'oxygène gazeux par le porteur d'oxygène est réalisée, notamment par un temps de séjour du porteur d'oxygène dans le dispositif d'étanchéité S1 adéquat. Le temps de séjour du porteur est typiquement compris entre 20 et 900 secondes, de préférence entre 40 et 300 secondes.

L'étanchéité gaz permise par le dispositif d'étanchéité S1, grâce à la fluidisation au moyen du gaz de fluidisation 4, est importante pour d'une part garantir le meilleur taux de captage de CO₂ qui soit, et d'autre part garantir la plus grande qualité possible pour le CO₂ capté. En effet, il s'agit que le gaz oxydant utilisé dans la zone d'oxydation ne contamine pas, ou le moins possible, la zone de réduction. Par exemple, l'étanchéité peut notamment permettre de respecter les normes d'incondensables dans le flux de CO₂ dans les fumées de combustion, en vue de son transport et/ou son stockage, typiquement moins de 5 % mol.

Le dispositif d'étanchéité S1 opère en lit fluidisé double, c'est-à-dire qu'il comporte deux lits fluidisés différents au sein du même dispositif, plus précisément deux lits fonctionnant selon des conditions de fluidisation différentes. Typiquement, pour opérer en lit fluidisé double, le dispositif d'étanchéité comporte deux zones en communication, chacune configurée pour fonctionner en lit fluidisé selon des conditions opératoires qui lui sont propres.

Le dispositif d'étanchéité S1 comporte de préférence une enceinte munie d'une première zone S1a et d'une deuxième zone S1b en communication fluidique, les conditions de fluidisation étant différentes dans les première et deuxième zones S1a et S1b de manière à créer lit fluidisé distinct dans chacune des première et deuxième zones. La première zone S1a reçoit des particules du porteur d'oxygène 3 issues de la zone d'oxydation. La deuxième zone S1b reçoit au moins une partie des particules du porteur d'oxygène issues de la première zone S1a qui libèrent de l'oxygène gazeux évacué dans le flux gazeux 6 par une conduite de sortie situe au sommet de la deuxième zone S1b.

L'injection du gaz de fluidisation 4 dans le dispositif d'étanchéité S1 peut être réalisée sous forme d'injections multiples (non représentées).

Le dispositif d'étanchéité S1 peut aussi être un siphon (« loop seal » en anglais) configuré pour évacuer le flux gazeux 6. Un tel siphon comporte une jambe descendante (« downleg » en anglais) ayant la même fonction que la première zone S1a, reliée, de préférence par un conduit sensiblement horizontal, à une jambe ascendante (« uplgeg » en anglais) ayant la même fonction que la zone S1b. La jambe ascendante comporte une première partie sous forme de conduit sensiblement vertical se prolongeant par une deuxième partie sous forme de conduit incliné descendant vers la capacité en aval, i.e. le réacteur fuel. Le siphon S1 comporte un conduit d'évacuation pour le gaz, de préférence positionné au sommet de la première partie de la jambe ascendante, à la jonction avec la deuxième partie inclinée la jambe ascendante. Ainsi, le siphon S1 permet d'évacuer le flux gazeux 6, contrairement à une configuration de siphon classique où la jambe ascendante (« upleg ») emmènerait intégralement le mélange formé par le solide et le gaz vers la capacité aval.

La figure 2 illustre schématiquement l'installation et le procédé CLC selon un deuxième mode de réalisation de l'invention. Ce deuxième mode de réalisation est en tout point identique au premier mode de réalisation représenté à la figure 1 et décrit ci-dessus, à l'exception que seule une partie du flux de recycle des fumées de combustion 9 est envoyée vers la zone de réduction R0, une autre partie 19, de préférence mineure, étant envoyée, après son refroidissement, compression et réchauffement successifs, vers le dispositif d'étanchéité S1 pour être utilisé en tant que gaz de fluidisation, en remplacement ou en complément du gaz de fluidisation neutre 4, de préférence en remplacement. En particulier, le flux gazeux de recycle des fumées 9 est refroidi par passage dans au moins un premier échangeur de chaleur E1, et de préférence ensuite par passage dans un deuxième échangeur de chaleur E2, puis ledit un flux de recycle des fumées refroidi est comprimé dans le compresseur C1, puis ledit un flux de recycle des fumées de combustion refroidi et comprimé 18 est réchauffé par passage dans l'échangeur de chaleur E1, avant qu'une partie, de préférence majeure, soit envoyée vers la zone de réduction R0, et qu'une autre partie 19, de préférence mineure, soit envoyée vers le dispositif d'étanchéité S1.

L'installation CLC a été décrite ci-dessus, parallèlement à la description du procédé CLC. On rappelle qu'elle comporte :
- la zone de réduction R0 configurée pour opérer en lit fluidisé et effectuer la combustion de la charge hydrocarbonée par mise en contact avec le porteur d'oxygène sous forme de particules ;
- la zone d'oxydation (non représentée dans les figures) configurée pour opérer en lit fluidisé et effectuer l'oxydation du porteur d'oxygène issu de la zone de réduction R0, par mise en contact avec un gaz oxydant, de préférence de l'air ;
- une ligne de transport du porteur d'oxygène depuis la zone d'oxydation vers la zone de réduction R0, ladite ligne de transport comportant le dispositif d'étanchéité S1 configuré pour opérer en lit fluidisé double au moyen d'un gaz de fluidisation neutre (4, 19) et pour former au moins le flux 7 comportant au moins la partie du porteur d'oxygène à destination de la zone de réduction R0 et le flux gazeux 6 comportant une partie du gaz de fluidisation neutre (4, 19) et du dioxygène gazeux libéré par le porteur d'oxygène, le dispositif d'étanchéité S1 comportant une conduite de sortie pour le flux gazeux 6;
- une ligne de recycle d'une partie 16 des fumées de combustion 15 dans la zone de réduction R0, les fumées pouvant contenir des espèces imbrûlées résiduelles issues de la zone de réduction R0, e.g. du CO et/ou de l'H₂ et/ou du CH₄, dans ladite zone de réduction R0. La ligne de recycle est connectée à la conduite de sortie du flux gazeux 6 du dispositif d'étanchéité S1 de manière à mélanger le flux gazeux 6 avec la partie 16 des fumées de combustion 15 et former un flux de recycle des fumées de combustion 9. La ligne de recycle comporte un système de refroidissement, de compression et de chauffage du flux de recycle des fumées de combustion 9 avant son envoi dans la zone de réduction R0.

### Exemples

Les exemples qui suivent visent à montrer certaines performances du procédé et de l'installation CLC selon l'invention, en particulier la réduction du besoin en vapeur d'eau pour assurer la fluidisation de la zone de réduction et la réduction du besoin en dioxygène externe pour la combustion des gaz imbrûlés CO et H₂ présents dans les fumées de combustion à recycler.

### Exemple 1

Cet exemple porte sur la mesure expérimentale de la vitesse de relargage d'oxygène d'un exemple de porteur d'oxygène présentant un effet CLOU.

Il met en œuvre un lit fluidisé batch (le solide porteur d'oxygène ne circule pas) dont la température peut être contrôlée par un dispositif externe comme des coquilles chauffantes et dont la composition des gaz de fluidisation peut être pilotée pour alternativement alimenter le réacteur avec une atmosphère oxydante, inerte ou réductrice. Les effluents gazeux sont collectés et un échantillon est analysé par chromatographie phase gaz. L'opération se fait par cycles avec une consigne de température maintenue constante sur chacune des phases.

La première phase du cycle consiste à fluidiser le réacteur avec un gaz oxydant (mélange N₂/O₂ à 20% vol. d'O₂). La fin de ce cycle est caractérisée par une teneur en O₂ en aval égale à celle en amont du réacteur traduisant une oxydation complète du matériau.

La seconde phase consiste à fluidiser le réacteur avec une atmosphère inerte. C'est pendant cette phase que l'on va mesurer l'effet CLOU. La fin de ce cycle est caractérisée par une teneur en O₂ qui tend vers zéro, soit l'épuisement de l'effet CLOU.

La troisième phase consiste à fluidiser le réacteur avec une atmosphère réductrice, typiquement du méthane CH₄. Le but est d'épuiser l'oxygène résiduel contenu dans la structure du porteur d'oxygène. La fin du cycle est la mesure d'une teneur en espèce réductrice en sortie égale à celle en entrée.

Après une nouvelle phase d'inertage pour le pas mélanger les atmosphère oxydantes et réductrices, on peut entamer un nouveau cycle.

On présente ici le suivi d'un matériau pendant la seconde phase du cycle.

Le porteur d'oxygène à base d'oxyde de manganèse est exposé à de l'air jusqu'à oxydation complète à 940°C, puis il est abruptement exposé à une atmosphère neutre par balayage à l'azote pur et le profil de relargage d'oxygène est enregistré en fonction du temps. Le porteur d'oxygène est un minerai naturel de manganèse, la pyrolusite, qui est une variété naturelle de dioxyde de manganèse, MnO₂, aussi connue sous le nom oxyde de manganèse (IV). Le couple oxydo-réducteur est Mn₂O₃/Mn₃O₄, et les particules du porteur ont une taille comprise entre 150 µm et 300 µm.

Les résultats sont présentés à la figure 3. L'axe des abscisses représente le temps (en secondes), et l'axe des ordonnées le flux d'O₂ par kg de porteur d'oxygène (en mol/kg/s), le porteur d'oxygène est d'abord exposé à de l'air jusqu'à oxydation complète à 940°C. Il est ensuite abruptement exposé à une atmosphère neutre par balayage à l'azote pur, et le profil de relargage d'oxygène est enregistré en fonction du temps.

### Exemple 2 (comparatif)

Un exemple d'installation CLC pilote, alimentée avec du petcoke comme combustible solide, est chargée avec un porteur d'oxygène à base d'oxyde de manganèse tel que décrit à l'exemple 1. Ce porteur d'oxygène présente un effet CLOU.

L'installation CLC pilote selon cet exemple 2 est similaire à celle représentée à la figure 1, à l'exception du fait qu'elle n'est pas configurée pour exploiter l'oxygène gazeux libéré par le porteur d'oxygène par effet CLOU dans le dispositif d'étanchéité S1 et effectuer le mélange du flux 6 avec la partie des fumées à recycler : elle ne comporte pas de connexion entre le dispositif d'étanchéité S1 et la ligne de recycle d'une partie 16 des fumées de combustion 15. Les éléments S0, S2, S3 ne sont pas détaillés dans le présent exemple.

Pour cet exemple d'installation CLC pilote, de 3MW, le temps de séjour estimé du porteur d'oxygène dans le dispositif d'étanchéité S1 est de 160 s. Grâce à l'intégration des profils de relargage d'oxygène en fonction du temps de séjour, il est ainsi possible d'estimer une quantité totale d'oxygène relarguée dans le dispositif d'étanchéité S1.

Le flux gazeux en sortie dispositif d'étanchéité S1 opérant en lit fluidisé double est combiné au flux principal d'air déplété sortant du réacteur air. La composition de la combinaison de ces deux flux est donnée dans le tableau 1 suivant :

**[Table 1]**

| Composition en % mol | |
|---|---|
| H₂ | 0.0% |
| H₂O | 8.7% |
| CO | 0.0% |
| CO₂ | 1.8% |
| CH₄ | 0.0% |
| O₂ | 2.7% |
| N₂ | 86.8% |
| SOx | 0.0% |
| NOx | 0.0% |

Dans les tableaux de composition chimique donnés dans cet exemple, les valeurs sont arrondies à un chiffre après la virgule.

Les fumées en sortie de réacteur fuel R0 sont recyclées pour partie afin de servir de gaz de fluidisation 9 injecté dans le réacteur fuel.

La composition des fumées en sortie de réacteur fuel est donnée dans le tableau 2 suivant :

**[Table 2]**

| Composition en % mol | |
|---|---|
| H₂ | 1.0% |
| H₂O | 43.6% |
| CO | 1.0% |
| CO₂ | 53.4% |
| CH₄ | 0.0% |
| O₂ | 0.0% |
| N₂ | 0.4% |
| SOx | 0.2% |
| NOx | 0.3% |

Etant donné que ces fumées contiennent des gaz imbrûlés CO et H₂, une combustion à l'air ou à l'oxygène, aussi appelée « polishing à l'air ou à l'oxygène » est nécessaire pour brûler ces gaz.

La portion de fumées sortant du réacteur fuel à 950°C, qui est destinée à être recyclée dans le réacteur fuel en tant que gaz de fluidisation, est un flux d'un débit de 1690 Nm³/h qui doit être mélangé avec un flux d'oxygène pur externe au procédé CLC, afin de brûler entièrement les composés CO et H₂ présents.

Le flux d'O₂ pur nécessaire pour éliminer CO et H₂ est de 17 Nm³/h.

En aval de la zone de mélange avec le flux d'O₂ pur externe, le flux est refroidi jusqu'à 150°C par échange successif avec les fumées refroidies puis avec des tubes d'eau de refroidissement. Le flux de fumées a la composition donnée dans le tableau 3 suivant (composition identique avant et après refroidissement) :

**[Table 3]**

| Composition en % mol | |
|---|---|
| H₂ | 0.0% |
| H₂O | 44.7% |
| CO | 0.0% |
| CO₂ | 54.5% |
| CH₄ | 0.0% |
| O₂ | 0.0% |
| N₂ | 0.4% |
| SOx | 0.2% |
| NOx | 0.3% |

Ce flux de fumées refroidi passe dans un compresseur de recycle et est ensuite réchauffé jusqu'à une température de 300°C par échange avec le flux de fumées chaudes, puis injecté dans le réacteur fuel, après mélange avec 135 kg/h de vapeur d'eau. La composition du gaz injecté dans le réacteur fuel est donnée dans le tableau 4 suivant :

**[Table 4]**

| Composition en % mol | |
|---|---|
| H₂ | 0.0% |
| H₂O | 49.6% |
| CO | 0.0% |
| CO₂ | 49.5% |
| CH₄ | 0.0% |
| O₂ | 0.0% |
| N₂ | 0.3% |
| SOx | 0.2% |
| NOx | 0.3% |

### Exemple 3 (selon l'invention)

Un autre exemple d'installation CLC pilote, alimentée avec du petcoke comme combustible solide, est chargée avec un porteur d'oxygène à base d'oxyde de manganèse tel que décrit à l'exemple 1. Ce porteur d'oxygène présente un effet CLOU.

L'installation CLC pilote selon cet exemple 3 est similaire à celle représentée à la figure 1, et est configurée pour exploiter l'oxygène gazeux libéré par le porteur d'oxygène par effet CLOU dans le dispositif d'étanchéité S1 et effectuer le mélange du flux 6 avec la partie des fumées à recycler. Les éléments S0, S2, S3 ne sont pas détaillés dans le présent exemple.

Contrairement à l'exemple 2, le flux gazeux en sortie du dispositif d'étanchéité S1 opérant en lit fluidisé double n'est pas combiné au flux principal d'air déplété sortant du réacteur air, mais il est mélange avec une partie du flux de fumées sortant du réacteur fuel.

La composition de l'air déplété en sortie de réacteur air est donnée dans le tableau 5 suivant :

**[Table 5]**

| Composition en % mol | |
|---|---|
| H₂ | 0.0% |
| H₂O | 0.1% |
| CO | 0.0% |
| CO₂ | 2.0% |
| CH₄ | 0.0% |
| O₂ | 2.3% |
| N₂ | 95.5% |
| SOx | 0.0% |
| NOx | 0.0% |

La composition des fumées en sortie de réacteur fuel est donnée dans le tableau 6 suivant :

**[Table 6]**

| Composition en % mol | |
|---|---|
| H₂ | 1.0% |
| H₂O | 43.6% |
| CO | 1.0% |
| CO₂ | 53.4% |
| CH₄ | 0.0% |
| O₂ | 0.0% |
| N₂ | 0.4% |
| SOx | 0.2% |
| NOx | 0.3% |

La portion de fumées sortant du réacteur fuel à 950°C, qui est destinée à être recyclée dans le réacteur fuel en tant que gaz de fluidisation 9, est un flux d'un débit de 1550 Nm³/h.

Le mélange de ce flux de fumées avec le flux gazeux d'un débit de 230 Nm³/h sortant à 1000°C du dispositif d'étanchéité S1 provoque la combustion des composés CO et H₂ présents dans les fumées. Un flux d'O₂ pur externe au procédé CLC, de 1 Nm³/h, doit être injecté pour éliminer complètement les composés CO et H₂ résiduels.

En aval de la zone de mélange avec le flux gazeux issu du dispositif d'étanchéité S1 et le flux d'O₂ pur externe, le flux de fumée est refroidi jusqu'à 150°C par échange successif avec les fumées refroidies puis avec des tubes d'eau de refroidissement, et a la composition donnée dans le tableau 7 suivant :

**[Table 7]**

| Composition en % mol | |
|---|---|
| H₂ | 0.0% |
| H₂O | 49.7% |
| CO | 0.0% |
| CO₂ | 49.7% |
| CH₄ | 0.0% |
| O₂ | 0.0% |
| N₂ | 0.3% |
| SOx | 0.2% |
| NOx | 0.2% |

Ce flux de fumées refroidi passe dans un compresseur de recycle et est ensuite réchauffé jusqu'à une température de 300°C par échange avec le flux de fumées chaudes, puis injecté dans le réacteur fuel. Il possède la composition requise en termes de concentration en vapeur d'eau, et par conséquent il n'est pas nécessaire de lui ajouter un flux de vapeur d'eau avant son injection dans le fond du réacteur fuel.

L'opération de la combustion en boucle chimique selon l'invention permet ainsi de réduire les coûts du procédé de façon significative, grâce à la réduction voire l'absence de recours à de la vapeur d'eau additionnelle, et la réduction de débit d'oxygène pur externe au procédé CLC utilisé pour la combustion des gaz imbrûlés CO et H₂ dans les fumées de combustion à recycler. Le tableau 8 suivant compare ces différents débits lors de l'opération selon l'exemple 2 et selon l'exemple 3 :

**[Table 8]**

| | Débit de vapeur additionnelle à injecter dans le fond du réacteur fuel (kg/h) | Débit d'oxygène pur pour brûler CO et H₂ (Nm³/h) |
|---|---|---|
| Exemple 2 (comparatif) | 135 | 17 |
| Exemple 3 (selon l'invention) | 0 | 1 |

## Revendications

1. Procédé de combustion d'une charge hydrocarbonée (8) par oxydo-réduction en boucle chimique dans lequel une masse active oxydo-réductrice sous forme de particules circule entre une zone d'oxydation et une zone de réduction (R0) opérant en lit fluidisé, comportant :
- la combustion de ladite charge hydrocarbonée (8) par mise en contact avec ladite masse active oxydo-réductrice dans la zone de réduction (R0) ;
- l'oxydation de ladite masse active oxydo-réductrice issue de ladite zone de réduction (R0) par mise en contact avec un gaz oxydant, de préférence de l'air, dans ladite zone d'oxydation;
caractérisé en les étapes de procédé suivantes :
- l'envoi de ladite masse active oxydo-réductrice oxydée dans au moins un dispositif d'étanchéité (S1) opérant en lit fluidisé double, positionné en aval de ladite zone d'oxydation sur une ligne de transport de ladite masse active oxydo-réductrice vers ladite zone de réduction (R0), ledit dispositif d'étanchéité étant alimenté par au moins un gaz de fluidisation neutre (4, 19), de manière à former au moins un premier flux (7) comportant au moins une partie de ladite masse active oxydo-réductrice envoyé vers ladite zone de réduction (R0) et un deuxième flux gazeux (6) comportant une partie dudit gaz de fluidisation neutre (4) et du dioxygène gazeux libéré par ladite masse active oxydo-réductrice ;
- le mélange dudit deuxième flux gazeux (6) avec une partie (16) des fumées de combustion (15) de manière à former un flux de recycle des fumées de combustion (9) envoyé au moins en partie, après avoir été successivement refroidi, comprimé, et réchauffé, dans ladite zone de réduction (R0) pour son opération en lit fluidisé.

2. Procédé selon la revendication 1, dans lequel la partie (16) des fumées de combustion (15) contient des espèces imbrûlées résiduelles issues de la zone de réduction (R0), et dans lequel est effectuée la combustion desdites espèces imbrûlées résiduelles au contact du dioxygène gazeux apporté par le mélange dudit deuxième flux gazeux (6) avec une partie (16) des fumées de combustion (15).

3. Procédé selon la revendication 2, comportant en outre l'injection de dioxygène frais (17) dans ladite partie (16) des fumées de combustion (15) pour compléter la combustion desdites espèces imbrûlées résiduelles.

4. Procédé selon l'une des revendications précédentes, comportant l'envoi d'une partie (19) dudit flux de recycle des fumées de combustion (9), après son refroidissement, compression et réchauffement successifs, dans ledit dispositif d'étanchéité (S1) pour l'opération dudit dispositif d'étanchéité (S1) en lit fluidisé.

5. Procédé selon l'une des revendications précédentes, dans lequel ledit un flux gazeux de recycle (9) est refroidi par passage dans au moins un premier échangeur de chaleur (E1), puis ledit un flux de recycle des fumées de combustion refroidi est comprimé dans un compresseur (C1), puis ledit un flux de recycle des fumées de combustion refroidi et comprimé est réchauffé par passage dans ledit premier échangeur de chaleur (E1) avant d'être envoyé au moins en partie vers la zone de réduction (R0).

6. Procédé selon la revendication 5, dans lequel ledit flux de recycle des fumées de combustion (9) est refroidi par passage dans une deuxième échangeur de chaleur (E2) positionné entre le premier échangeur de chaleur (E1) et le compresseur (C1).

7. Procédé selon l'une des revendications 5 ou 6, dans lequel ledit flux de recycle des fumées de combustion (9) est refroidi à une température comprise entre 70°C et 450°C, de préférence comprise entre 70°C et 300°C, puis comprimé à une pression comprise entre 0,02 MPa et 0,3 MPa, puis réchauffé à une température comprise entre 300°C et 950°C.

8. Procédé selon l'une des revendications précédentes, dans lequel ledit deuxième flux gazeux (6) issu dudit dispositif d'étanchéité (S1) comporte entre 1% et 20% vol. de dioxygène gazeux.

9. Procédé selon l'une des revendications précédentes, dans lequel ladite masse active oxydo-réductrice comporte au moins un composé choisi dans la liste constituée par les oxydes de cuivre, les oxydes de cobalt, les oxydes de manganèse, les oxydes mixtes cobalt-fer ou manganèse-fer de préférence sous forme de spinelles, des pérovskites, seuls ou en mélange, et de préférence ladite masse active oxydo-réductrice comporte au moins un oxyde de cuivre ou de manganèse, de préférence associé à un support d'alumine, de silice, alumino-silicique, de feldspaths tels que la celsiane, la slawsonite, l'anorthite ou de feldspathoïdes tel que la kalsilite.

10. Procédé selon l'une des revendications précédentes, dans lequel ledit gaz de fluidisation neutre (4, 19) envoyé dans ledit dispositif d'étanchéité (S1) est essentiellement constitué de vapeur d'eau, de CO₂, ou d'un mélange de CO₂ et de vapeur d'eau comportant entre 0 et 2% vol. d'O₂, de préférence moins de 2% vol. d'O₂.

11. Procédé selon l'une des revendications précédentes, dans lequel ledit dispositif d'étanchéité (S1) comporte une enceinte munie d'une première zone (S1a) et d'une deuxième zone (S1b) en communication fluidique, les conditions de fluidisation étant différentes dans lesdites première et deuxième zones de manière à créer lit fluidisé distinct dans chacune des première et deuxième zones, ladite première zone (S1a) recevant des particules de masse active oxydo-réductrice issues du réacteur d'oxydation, et ladite deuxième zone (S1b) recevant au moins une partie desdites particules de masse active oxydo-réductrice issues de ladite première zone (S1a) qui libèrent du dioxygène gazeux évacué dans ledit deuxième flux gazeux (6) par une conduite de sortie située au sommet de ladite deuxième zone (S1b).

12. Procédé selon la revendication 11, dans lequel un troisième flux (5) comportant une partie de ladite masse active oxydo-réductrice est formé et extrait dudit fond dudit dispositif d'étanchéité (S1) pour être à nouveau envoyé dans ladite zone d'oxydation.

13. Procédé selon l'une des revendications précédentes, dans lequel ladite masse active oxydo-réductrice envoyée dans ledit dispositif d'étanchéité (S1) est préalablement séparée du gaz oxydant déplété en oxygène issu de la zone d'oxydation au sein d'un cyclone (S0) positionné entre ladite zone d'oxydation et ledit dispositif d'étanchéité (S1).

14. Procédé selon l'une des revendications précédentes, dans lequel ladite charge hydrocarbonée (8) est une charge solide sous forme de particules, choisie de préférence dans la liste constituée par le charbon, le coke, le petcoke, la biomasse, les sables bitumineux et les déchets ménagers, ledit procédé comprenant en outre :
- la séparation, dans un séparateur solide/solide (S2) opérant en lit fluidisé et positionné en sortie de la zone de réduction (R0), entre les particules de ladite masse active oxydo-réductrice et des particules d'imbrûlés générées par la combustion de la dite charge hydrocarbonée solide (8) contenues dans un premier mélange gaz-solide (11) issu de ladite zone de réduction (R0), ledit séparateur solide/solide opérant en lit fluidisé, puis
- la séparation, dans un séparateur gaz/solide (S3) positionné en aval dudit séparateur solide/solide (S2), entre les particules d'imbrûlés et la phase gaz contenues dans un deuxième mélange gaz-solide (14) issus du séparateur solide/solide (S2), un flux (10) comportant lesdites particules d'imbrûlés étant de préférence envoyé dans ladite zone de réduction (R0), et ladite phase gaz formant les fumées de combustion (15).

15. Installation pour réaliser le procédé de combustion d'une charge hydrocarbonée par oxydo-réduction en boucle chimique selon l'une quelconque des revendications précédentes, comportant :
- une zone de réduction (R0) configurée pour opérer en lit fluidisé et effectuer la combustion de ladite charge hydrocarbonée par mise en contact avec une masse active oxydo-réductrice sous forme de particules ;
- une zone d'oxydation configurée pour opérer en lit fluidisé et effectuer l'oxydation de ladite masse active oxydo-réductrice issue de ladite zone de réduction (R0) par mise en contact avec un gaz oxydant, de préférence de l'air ;
- une ligne de transport de ladite masse active oxydo-réductrice de ladite zone d'oxydation vers ladite zone de réduction (R0),
caractérisé en ladite ligne de transport comportant un dispositif d'étanchéité (S1) configuré pour opérer en lit fluidisé double au moyen d'un gaz de fluidisation neutre (4, 19) et pour former au moins un premier flux (7) comportant au moins une partie de ladite masse active oxydo-réductrice à destination de ladite zone de réduction (R0) et un deuxième flux gazeux (6) comportant une partie dudit gaz de fluidisation neutre (4, 19) et du dioxygène gazeux libéré par ladite masse active oxydo-réductrice, ledit dispositif d'étanchéité (S1) comportant une conduite de sortie pour ledit deuxième flux gazeux (6);
- une ligne de recycle d'une partie (16) des fumées de combustion (15) dans ladite zone de réduction (R0),
ladite ligne de recycle étant connectée à ladite conduite sortie dudit deuxième flux gazeux (6) du dispositif d'étanchéité (S1) de manière à mélanger ledit deuxième flux gazeux (6) avec ladite partie (16) des fumées de combustion (15) et former un flux de recycle des fumées de combustion (9), et ladite ligne de recycle comportant un système de refroidissement, de compression et de chauffage dudit flux de recycle des fumées de combustion (9) avant son envoi dans ladite zone de réduction (R0).

## Patentansprüche

1. Verfahren zur Verbrennung eines kohlenwasserstoffhaltigen Einsatzmaterials (8) durch eine Chemical-Looping-Redoxreaktion, bei dem eine partikelförmige redoxaktive Masse zwischen einem Oxidationsbereich und einem mit Wirbelschicht betriebenen Reduktionsbereich (R0) zirkuliert, umfassend:
- die Verbrennung des kohlenwasserstoffhaltigen Einsatzmaterials (8) durch Kontaktieren mit der redoxaktiven Masse in dem Reduktionsbereich (R0);
- die Oxidation der aus dem Reduktionsbereich (R0) hervorgegangenen redoxaktiven Masse durch Kontaktieren mit einem oxidierenden Gas, bevorzugt Luft, in dem Oxidationsbereich;
**gekennzeichnet durch** die folgenden Verfahrensschritte:
- das Leiten der oxidierten redoxaktiven Masse in mindestens eine mit Zweibett-Wirbelschicht betriebene Abdichtungsvorrichtung (S1), die stromab des Oxidationsbereichs an einer Leitung zum Fördern der redoxaktiven Masse zu dem Reduktionsbereich (R0) angeordnet ist, wobei der Abdichtungsvorrichtung mindestens ein neutrales Fluidisierungsgas (4, 19) zugeführt wird, so dass mindestens ein erster Strom (7), der mindestens einen Teil der zu dem Reduktionsbereich (R0) geleiteten redoxaktiven Masse umfasst, und ein zweiter gasförmiger Strom (6), der einen Teil des neutralen Fluidisierungsgases (4) und von der redoxaktiven Masse freigesetzten gasförmigen Disauerstoff umfasst, gebildet werden;
- das Mischen des zweiten gasförmigen Stroms (6) mit einem Teil (16) der Verbrennungsgase (15), so dass ein Rückführstrom der Verbrennungsgase (9) gebildet wird, der mindestens zum Teil, nachdem er sukzessive gekühlt, verdichtet und wieder erhitzt worden ist, in den Reduktionsbereich (R0) zu dessen Wirbelschichtbetrieb geleitet wird.

2. Verfahren nach Anspruch 1, bei dem der Teil (16) der Verbrennungsgase (15) restliche unverbrannte Spezies enthält, die aus dem Reduktionsbereich (R0) hervorgegangen sind, und bei dem die Verbrennung der restlichen unverbrannten Spezies in Kontakt mit dem gasförmigen Disauerstoff durchgeführt wird, der durch das Mischen des zweiten gasförmigen Stroms (6) mit einem Teil (16) der Verbrennungsgase (15) zugeführt wird.

3. Verfahren nach Anspruch 2, umfassend ferner das Einleiten von frischem Disauerstoff (17) in den Teil (16) der Verbrennungsgase (15), um die Verbrennung der restlichen unverbrannten Spezies zu vollenden.

4. Verfahren nach einem der vorhergehenden Ansprüche, umfassend das Leiten eines Teils (19) des Rückführstroms der Verbrennungsgase (9), nach seiner sukzessiven Kühlung, Verdichtung und Wiedererhitzung, in die Abdichtungsvorrichtung (S1) für den Wirbelschichtbetrieb der Abdichtungsvorrichtung (S1).

5. Verfahren nach einem der vorhergehenden Ansprüche, bei dem der eine gasförmige Rückführstrom (9) durch Durchströmen mindestens eines ersten Wärmetauschers (E1) gekühlt wird, dann der eine gekühlte Rückführstrom der Verbrennungsgase in einem Kompressor (C1) verdichtet wird, dann der eine gekühlte und verdichtete Rückführstrom der Verbrennungsgase durch Durchströmen des ersten Wärmetauschers (E1) wieder erhitzt wird, bevor er mindestens zum Teil zu dem Reduktionsbereich (R0) geleitet wird.

6. Verfahren nach Anspruch 5, bei dem der Rückführstrom der Verbrennungsgase (9) durch Durchströmen eines zweiten Wärmetauschers (E2) gekühlt wird, der zwischen dem ersten Wärmetauscher (E1) und dem Kompressor (C1) angeordnet ist.

7. Verfahren nach einem der Ansprüche 5 oder 6, bei dem der Rückführstrom der Verbrennungsgase (9) auf eine Temperatur zwischen 70 °C und 450 °C, bevorzugt zwischen 70 °C und 300 °C, gekühlt wird, dann auf einen Druck zwischen 0,02 MPa und 0,3 MPa verdichtet wird, dann auf eine Temperatur zwischen 300 °C und 950 °C wieder erhitzt wird.

8. Verfahren nach einem der vorhergehenden Ansprüche, bei dem der zweite gasförmige Strom (6), der aus der Abdichtungsvorrichtung (S1) hervorgegangen ist, zwischen 1 Vol.-% und 20 Vol.-% gasförmigen Disauerstoff umfasst.

9. Verfahren nach einem der vorhergehenden Ansprüche, bei dem die redoxaktive Masse mindestens eine Verbindung umfasst, die aus der Liste gewählt ist, die aus den Kupferoxiden, den Kobaltoxiden, den Manganoxiden, den Kobalt-Eisen- oder Mangan-Eisen-Mischoxiden, bevorzugt in Form von Spinellen, Perovskiten, allein oder gemischt, besteht, und die redoxaktive Masse bevorzugt mindestens ein Kupfer- oder Manganoxid umfasst, bevorzugt kombiniert mit einem Aluminiumoxid-, Siliciumoxid-, Aluminiumoxid-Siliciumoxid-, Feldspatträger wie Celsian, Slawsonit, Anorthit oder Feldspatoidträger wie Kalsilit.

10. Verfahren nach einem der vorhergehenden Ansprüche, bei dem das neutrale Fluidisierungsgas (4, 19), das in die Abdichtungsvorrichtung (S1) geleitet wird, im Wesentlichen aus Wasserdampf, aus CO₂ oder aus einem Gemisch aus CO₂ und Wasserdampf besteht, das zwischen 0 und 2 Vol.-% O₂, bevorzugt weniger als 2 Vol.-% O₂ umfasst.

11. Verfahren nach einem der vorhergehenden Ansprüche, bei dem die Abdichtungsvorrichtung (S1) eine Kammer umfasst, die mit einem ersten Bereich (Sla) und einem zweiten Bereich (S1b) in Fluidverbindung versehen ist, wobei die Fluidisierungsbedingungen in den ersten und zweiten Bereichen verschieden sind, so dass in jedem der ersten und zweiten Bereiche eine separate Wirbelschicht erzeugt wird, wobei der erste Bereich (Sla) Partikel von redoxaktiver Masse aufnimmt, die aus dem Oxidationsreaktor hervorgegangen sind, und wobei der zweite Bereich (S1b) mindestens einen Teil der aus dem ersten Bereich (Sla) hervorgegangenen Partikel von redoxaktiver Masse aufnimmt, die gasförmigen Sauerstoff freisetzen, der durch eine am oberen Ende des zweiten Bereichs (S1b) gelegene Austrittsleitung in dem zweiten gasförmigen Strom (6) abgeführt wird.

12. Verfahren nach Anspruch 11, bei dem ein dritter Strom (5), der einen Teil der redoxaktiven Masse umfasst, gebildet wird und am Boden der Abdichtungsvorrichtung (S1) abgezogen wird, um erneut in den Oxidationsbereich geleitet zu werden.

13. Verfahren nach einem der vorhergehenden Ansprüche, bei dem die redoxaktive Masse, die in die Abdichtungsvorrichtung (S1) geleitet wird, zuvor von dem an Sauerstoff verarmten oxidierenden Gas, das aus dem Oxidationsbereich hervorgegangen ist, in einem Zyklon (S0) getrennt wird, der zwischen dem Oxidationsbereich und der Abdichtungsvorrichtung (S1) angeordnet ist.

14. Verfahren nach einem der vorhergehenden Ansprüche, bei dem das kohlenwasserstoffhaltige Einsatzmaterial (8) ein partikelförmiges festes Einsatzmaterial ist, das bevorzugt aus der Liste gewählt ist, die aus Kohle, Koks, Petrolkoks, Biomasse, Bitumensanden und Haushaltsabfällen besteht, wobei das Verfahren ferner umfasst:
- die Trennung, in einem Feststoff/Feststoff-Separator (S2), der mit Wirbelschicht betrieben wird und am Ausgang des Reduktionsbereichs (R0) angeordnet ist, zwischen den Partikeln der redoxaktiven Masse und den Partikeln von Unverbranntem, die durch die Verbrennung des festen kohlenwasserstoffhaltigen Einsatzmaterials (8) erzeugt werden und in einem ersten Gas/Feststoff-Gemisch (11) enthalten sind, das aus dem Reduktionsbereich (R0) hervorgegangen ist, wobei der Feststoff/Feststoff-Separator mit Wirbelschicht betrieben wird, dann
- die Trennung, in einem Gas/Feststoff-Separator (S3), der stromab des Feststoff/Feststoff-Separators (S2) angeordnet ist, zwischen den Partikeln von Unverbranntem und der Gasphase, die in einem zweiten Gas/Feststoff-Gemisch (14) enthalten sind, das aus dem Feststoff/Feststoff-Separator (S2) hervorgegangen ist, wobei ein Strom (10), der die Partikel von Unverbranntem umfasst, bevorzugt in den Reduktionsbereich (R0) geleitet wird und wobei die Gasphase die Verbrennungsgase (15) bildet.

15. Anlage zur Durchführung des Verfahrens zur Verbrennung eines kohlenwasserstoffhaltigen Einsatzmaterials durch eine Chemical-Looping-Redoxreaktion nach einem der vorhergehenden Ansprüche, umfassend:
- einen Reduktionsbereich (R0), der dazu ausgestaltet ist, mit Wirbelschicht betrieben zu werden und die Verbrennung des kohlenwasserstoffhaltigen Einsatzmaterials durch Kontaktieren mit einer partikelförmigen redoxaktiven Masse durchzuführen;
- einen Oxidationsbereich, der dazu ausgestaltet ist, mit Wirbelschicht betrieben zu werden und die Oxidation der aus dem Reduktionsbereich (R0) hervorgegangenen redoxaktiven Masse durch Kontaktieren mit einem oxidierenden Gas, bevorzugt Luft, durchzuführen;
- eine Leitung zum Fördern der redoxaktiven Masse von dem Oxidationsbereich zu dem Reduktionsbereich (R0), **dadurch gekennzeichnet, dass** die Leitung zum Fördern eine Abdichtungsvorrichtung (S1) umfasst, die dazu ausgestaltet ist, mit Zweibett-Wirbelschicht mittels eines neutralen Fluidisierungsgases (4, 19) betrieben zu werden und mindestens einen ersten Strom (7), der mindestens einen Teil der für den Reduktionsbereich (R0) bestimmten redoxaktiven Masse umfasst, und einen zweiten gasförmigen Strom (6), der einen Teil des neutralen Fluidisierungsgases (4, 19) und von der redoxaktiven Masse freigesetzten gasförmigen Disauerstoff umfasst, zu bilden, wobei die Abdichtungsvorrichtung (S1) eine Austrittsleitung für den zweiten gasförmigen Strom (6) umfasst;
- eine Rückführleitung zum Rückführen eines Teils (16) der Verbrennungsgase (15) in den Reduktionsbereich (R0), wobei die Rückführleitung mit der Austrittsleitung für den zweiten gasförmigen Strom (6) der Abdichtungsvorrichtung (S1) verbunden ist, so dass der zweite gasförmige Strom (6) mit dem Teil (16) der Verbrennungsgase (15) gemischt wird und ein Rückführstrom der Verbrennungsgase (9) gebildet wird, und wobei die Rückführleitung ein System zum Kühlen, Verdichten und Erhitzen des Rückführstroms der Verbrennungsgase (9) vor dessen Leitung in den Reduktionsbereich (R0) umfasst.

## Claims

1. Process for the combustion of a hydrocarbon feedstock (8) by chemical looping oxidation/reduction in which an oxidation/reduction active mass in the form of particles circulates between an oxidation zone and a reduction zone (R0) operating as a fluidized bed, comprising:
- the combustion of said hydrocarbon feedstock (8) by bringing it into contact with said oxidation/reduction active mass in the reduction zone (R0);
- the oxidation of said oxidation/reduction active mass resulting from said reduction zone (R0) by bringing it into contact with an oxidizing gas, preferably air, in said oxidation zone;
**characterized by** the following process stages:
- sending said oxidized oxidation/reduction active mass into at least one sealing device (S1) operating as a double fluidized bed, positioned downstream of said oxidation zone on a line for transportation of said oxidation/reduction active mass to said reduction zone (R0), said sealing device being fed with at least a neutral fluidizing gas (4, 19), so as to form at least a first stream (7) comprising at least a portion of said oxidation/reduction active mass sent to said reduction zone (R0) and a second gas stream (6) comprising a portion of said neutral fluidizing gas (4) and gaseous molecular oxygen released by said oxidation/reduction active mass;
- mixing said second gas stream (6) with a portion (16) of the combustion flue gases (15) so as to form a combustion flue gases recycle stream (9) sent, at least in part, after having been successively cooled, compressed and reheated, into said reduction zone (R0) for its operation as a fluidized bed.

2. Process according to Claim 1, in which the portion (16) of the combustion flue gases (15) contains residual unburned entities resulting from the reduction zone (R0), and in which the combustion of said residual unburned entities is carried out in contact with the gaseous molecular oxygen supplied by the mixing of said second gas stream (6) with a portion (16) of the combustion flue gases (15).

3. Process according to Claim 2, additionally comprising the injection of fresh molecular oxygen (17) into said portion (16) of the combustion flue gases (15) in order to complete the combustion of said residual unburned entities.

4. Process according to one of the preceding claims, comprising sending a portion (19) of said combustion flue gases recycle stream (9), after its successive cooling, compression and reheating, into said sealing device (S1) for the operation of said sealing device (S1) as a fluidized bed.

5. Process according to one of the preceding claims, in which said one gases recycle stream (9) is cooled by passing through at least a first heat exchanger (E1), then said one cooled combustion flue gases recycle stream is compressed in a compressor (C1), then said one cooled and compressed combustion flue gases recycle stream is reheated by passing through said first heat exchanger (E1) before being sent, at least in part, to the reduction zone (R0).

6. Process according to Claim 5, in which said combustion flue gases recycle stream (9) is cooled by passing through a second heat exchanger (E2) positioned between the first heat exchanger (E1) and the compressor (C1).

7. Process according to either of Claims 5 and 6, in which said combustion flue gases recycle stream (9) is cooled to a temperature of between 70°C and 450°C, preferably of between 70°C and 300°C, then compressed to a pressure of between 0.02 MPa and 0.3 MPa, then reheated to a temperature of between 300°C and 950°C.

8. Process according to one of the preceding claims, in which said second gas stream (6) resulting from said sealing device (S1) comprises between 1 vol% and 20 vol% of gaseous molecular oxygen.

9. Process according to one of the preceding claims, in which said oxidation/reduction active mass comprises at least one compound chosen from the list consisting of copper oxides, cobalt oxides, manganese oxides, cobalt-iron or manganese-iron mixed oxides, preferably in the form of spinels, perovskites, alone or as a mixture, and preferably said oxidation/reduction active mass comprises at least one copper or manganese oxide, preferably combined with an alumina, silica, alumina/silica, feldspar, such as celsian, slawsonite or anorthite, or feldspathoid, such as kalsilite, support.

10. Process according to one of the preceding claims, in which said neutral fluidizing gas (4, 19) sent into said sealing device (S1) consists essentially of steam, of CO₂ or of a mixture of CO₂ and of steam comprising between 0 vol% and 2 vol% of O₂, preferably less than 2 vol% of O₂.

11. Process according to one of the preceding claims, in which said sealing device (S1) comprises a chamber provided with a first zone (Sla) and with a second zone (S1b) in fluidic communication, the fluidization conditions being different in said first and second zones, so as to create a separate fluidized bed in each of the first and second zones, said first zone (Sla) receiving oxidation/reduction active mass particles resulting from the oxidation reactor, and said second zone (S1b) receiving at least a portion of said oxidation/reduction active mass particles resulting from said first zone (Sla) which release gaseous molecular oxygen discharged in said second gas stream (6) via an outlet pipe located at the top of said second zone (S1b).

12. Process according to Claim 11, in which a third stream (5) comprising a portion of said oxidation/reduction active mass is formed and extracted from said bottom of said sealing device (S1) in order to be again sent into said oxidation zone.

13. Process according to one of the preceding claims, in which said oxidation/reduction active mass sent into said sealing device (S1) is separated beforehand from the oxygen-depleted oxidizing gas resulting from the oxidation zone within a cyclone (S0) positioned between said oxidation zone and said sealing device (S1).

14. Process according to one of the preceding claims, in which said hydrocarbon feedstock (8) is a solid feedstock in the form of particles, preferably chosen from the list consisting of coal, coke, petcoke, biomass, oil sands and household waste, said process additionally comprising:
- the separation, in a solid/solid separator (S2) operating as a fluidized bed and positioned at the outlet of the reduction zone (R0), between the particles of said oxidation/reduction active mass and particles of unburned matter generated by the combustion of said solid hydrocarbon feedstock (8) which are contained in a first gas/solid mixture (11) resulting from said reduction zone (R0), said solid/solid separator operating as a fluidized bed, then
- the separation, in a gas/solid separator (S3) positioned downstream of said solid/solid separator (S2), between the particles of unburned matter and the gas phase which are contained in a second gas/solid mixture (14) resulting from the solid/solid separator (S2), a stream (10) comprising said particles of unburned matter being preferably sent into said reduction zone (R0), and said gas phase forming the combustion flue gases (15).

15. Plant for carrying out the process for the combustion of a hydrocarbon feedstock by chemical looping oxidation/reduction according to any one of the preceding claims, comprising:
- a reduction zone (R0) configured to operate as a fluidized bed and to carry out the combustion of said hydrocarbon feedstock by bringing it into contact with an oxidation/reduction active mass in the form of particles;
- an oxidation zone configured to operate as a fluidized bed and to carry out the oxidation of said oxidation/reduction active mass resulting from said reduction zone (R0) by bringing it into contact with an oxidizing gas, preferably air;
- a line for transportation of said oxidation/reduction active mass from said oxidation zone to said reduction zone (R0), **characterized in that** said transportation line comprises a sealing device (S1) configured to operate as a double fluidized bed by means of a neutral fluidizing gas (4, 19) and to form at least a first stream (7) comprising at least a portion of said oxidation/reduction active mass destined for said reduction zone (R0) and a second gas stream (6) comprising a portion of said neutral fluidizing gas (4, 19) and gaseous molecular oxygen released by said oxidation/reduction active mass, said sealing device (S1) comprising an outlet pipe for said second gas stream (6);
- a line for recycling a portion (16) of the combustion flue gases (15) in said reduction zone (R0), said recycling line being connected to said outlet pipe for said second gas stream (6) of the sealing device (S1) so as to mix said second gas stream (6) with said portion (16) of the combustion flue gases (15) and form a combustion flue gases recycling stream (9), and said recycling line comprising a system for cooling, compressing and heating said combustion flue gases recycle stream (9) before it is sent into said reduction zone (R0).
